# EUROPÄISCHE PATENTSCHRIFT

(11) **EP 3 272 828 B1**
(45) Veröffentlichungstag und Bekanntmachung des Hinweises auf die Patenterteilung: **01.08.2018**
(21) Anmeldenummer: 17001195.1
(22) Anmeldetag: 13.07.2017
(51) Int. Cl.: C09J 133/08, C08F 220/18, C09J 7/00

(54) **HAFTKLEBEMASSEN FÜR DIE VERKLEBUNG VON FLEXIBLEN DRUCKPLATTEN**
ADHESIVE SUBSTANCES FOR STICKING TOGETHER FLEXIBLE PRINTING PLATES
SUBSTANCES ADHÉSIVES DESTINÉES À COLLER DES PLAQUES DE SERRAGE SOUPLES

(30) Priorität: 19.07.2016 DE 102016213184
(43) Veröffentlichungstag der Anmeldung: 24.01.2018
(73) Patentinhaber: tesa SE, 22848 Norderstedt (DE)
(72) Erfinder: Ellringmann, Kai, D-22589 Hamburg (DE); Kerber, Kristin, D-22529 Hamburg (DE); Pütz, Benjamin, D-22527 Hamburg (DE)

(56) Entgegenhaltungen:
- WO-A1-2014/001096
- WO-A1-2015/086545
- DD-A7- 299 378

## Beschreibung

Die Erfindung betrifft die Verwendung einer Haftklebemasse, umfassend zumindest eine Haftklebekomponente, umfassend zumindest eine Polymerkomponente auf Basis einer Monomermischung enthaltend mindestens eines der folgenden Monomere: mindestens einen Acrylsäureester, mindestens einen Methacrylsäureester, Acrylsäure und/oder Methacrylsäure, für die Verklebung von Druckplatten, insbesondere auf Druckzylindern und/oder Druckhülsen sowie eine solche Verwendung, bei der die Haftklebemasse in Form eines Klebebandes bereitgestellt ist.

In der Druckindustrie sind unterschiedliche Verfahren bekannt, um Motive mittels druckender Vorlagen auf beispielsweise Papier oder Folien zu übertragen. Eine Möglichkeit besteht im sogenannten Flexodruck.

Im Flexodruckverfahren werden flexible Druckplatten (auch als Klischees bezeichnet) auf Druckzylinder oder Druckhülsen (letztere auch als Sleeves bezeichnet) verklebt. Derartige Klischees bestehen beispielsweise aus einer Polyethylenterephthalat-Folie (PET-Folie), auf die eine Schicht eines Fotopolymers aufgebracht ist, in die durch Belichtung der druckenden und anschließendem Auswaschen der nichtdruckenden Elemente das entsprechende Druckrelief eingebracht werden kann. Die Verklebung des Klischees auf dem Druckzylinder bzw. der Druckhülse erfolgt dann über die PET- Folie. Zur Verklebung werden in der Regel doppelseitige Haftklebebänder eingesetzt, an die sehr hohe Anforderungen gestellt werden. Für den Druckprozess muss das Haftklebeband eine bestimmte Härte, aber auch eine bestimmte Elastizität aufweisen. Diese Eigenschaften müssen sehr genau eingestellt werden, damit das erzeugte Druckbild gemäß den Anforderungen das gewünschte Ergebnis liefert. Hohe Anforderungen werden ebenfalls an die Haftklebemasse gestellt, da die Klebkraft ebenfalls ausreichend sein sollte, damit sich die Druckplatte nicht von dem doppelseitigen Haftklebeband oder das Haftklebeband vom Zylinder bzw. der Hülse ablöst. Dies gilt auch bei erhöhten Temperaturen von 40 bis 60 °C und bei höheren Druckgeschwindigkeiten. Neben dieser Eigenschaft muss die Haftklebemasse aber auch reversible Hafteigenschaften besitzen, um die Druckplatten nach den Druckvorgängen wieder ablösen zu können (dabei muss sowohl die Klebeverbindung des Haftklebebandes zum Druckzylinder bzw. zur Druckhülse als auch die zum Klischee rückstandsfrei zu lösen sein, um eine Wiederverwendbarkeit beider Komponenten zu gewährleisten). Diese Ablösbarkeit sollte auch nach einer Verklebung über einen längeren Zeitraum (bis zu 6 Monate) gegeben sein. Zudem ist es erwünscht, dass sich das Haftklebeband und insbesondere die Druckplatte ohne Zerstörung dieser, sowie ohne großen Kraftaufwand wieder entfernen lässt, da die Druckplatten in der Regel mehrfach eingesetzt werden. Zudem sollten keine Rückstände auf der Druckplatte und auf dem Zylinder bzw. der Hülse verbleiben. Zusammenfassend werden somit sehr hohe Anforderungen an die für diesen Einsatz geeigneten doppelseitigen Haftklebebänder gestellt.

Die rückstandsfreie Wiederablösbarkeit ist insbesondere bei polaren Untergründen wie beispielweise Stahl ein Problem, da hier festgestellt wurde, dass die Klebkräfte im Laufe der Zeit erheblich ansteigen. Im Rahmen dieser Schrift werden in Bezug auf Oberflächen die Begriffe "polar" und "hochenergetisch", also mit einer hohen Oberflächenenergie (OFE), gleich gesetzt, ebenso die Begriffe "unpolar" und "niederenergetisch, da sich dieses vereinfachende Modell in der Praxis durchgesetzt hat. Dahinter steht die Erkenntnis, dass polare Dipolkräfte vergleichsweise stark sind gegenüber sogenannten "dispersen" oder unpolaren Wechselwirkungen, die ohne Beteiligung permanenter molekularer Dipole aufgebaut werden. Die Grundlage dieses Modells der Grenzflächenenergie und Grenzflächenwechselwirkungen ist die Vorstellung, dass polare Komponenten nur mit polaren wechselwirken und unpolare nur mit unpolaren.

Gemessen werden diese Energie und ihre Komponenten oft mittels Messung der statischen Kontaktwinkel unterschiedlicher Testflüssigkeiten. Den Oberflächenspannungen dieser Flüssigkeiten werden polare und unpolare Anteile zugeordnet. Aus den beobachteten Kontaktwinkeln der Tropfen auf der Prüfoberfläche werden die polaren und unpolaren Anteile der Oberflächenenergie der Prüfoberfläche ermittelt. Dies kann zum Beispiel nach dem OWKR-Modell erfolgen. Eine industriell übliche alternative Methode ist die Bestimmung mittels Testtinten nach DIN ISO 8296.

Als Haftklebemassen kommen beispielsweise solche auf Naturkautschukbasis in Frage, wie etwa die EP 760 389 A dokumentiert. Für den genannten Einsatzzweck werden aber auch Haftklebebänder eingesetzt, die Haftklebemassen auf Polyacrylatbasis aufweisen. So beschreibt beispielsweise die WO 03/057497 A eine Acrylathaftklebemasse auf Blockcopolymerbasis für den genannten Anwendungszweck. Die WO 2004/067661 A offenbart ein Haftklebeband mit einer Haftklebemasse auf Basis von mindestens 49,5 Gew-% eines weichen Acrylmonomers (T_{G} < -20°C), eines harten, zyklischen oder linearen (Meth)Acrylsäureester-Monomers (T_{G} > 30°C), mindestens 10 Gew.-% harter (Meth)Acrylsäure/-ester-Monomere (T_{G} > 30°C) und mindestens 0,5 Gew-% funktionalisierter harter (Meth)Acrylsäure/-ester-Monomere (T_{G} > 30°C), wobei die Haftklebemasse in einem zweistufigen Verfahren hergestellt wird.

Ein weiterer Nachteil vieler aus dem Stand der Technik bekannter Haftklebemassen für die Verklebung von Druckklischees zeigt sich insbesondere dann, wenn die verklebten Druckklischees von der Druckfarbe gereinigt werden sollen. Dies wird üblicherweise dadurch bewirkt, dass man die Lösungsmittel, die auch als Lösungsmittel für die Farben an sich dienen, in großer Menge zum Abwaschen und Ablösen der Farben von den Klischees einsetzt. Dabei kommt es unweigerlich zu einem Unterkriechen von Lösungsmittel unter die Ränder der Verklebung des Klischees auf dem Haftklebeband und der Ränder des Klebebandes auf dem Druckzylinder beziehungsweise der Druckhülse. Hierbei kommt es zu einem Ablösen der Verklebung (des Klischees auf dem Klebeband bzw. des Klebebandes auf dem Zylinder bzw. der Hülse), da die Klebemassen des Haftklebebandes die notwendige Haftung verlieren. Die aufgrund dieser fehlenden Lösemittelbeständigkeit entstehenden abgehobenen Kanten ("Fahnen") werden im Prozess mitgedruckt, wodurch ein fehlerhaftes Druckbild entsteht (allgemein als "Fehldruck" bezeichnet), sofern es nicht sogar zu mechanischen Problemen mit den Fahnen in der Druckapparatur und somit zu Systemausfällen kommt. In der Praxis müssen deshalb die Verklebungen von Druckklischees, die mit Klebemassen nach dem Stand der Technik montiert wurden, durch Versiegelung der jeweiligen Ränder mit einseitig klebenden Haftklebebändern oder mit Flüssig- oder Schmelzklebern gegen das Lösungsmittel geschützt werden.

Dieser zusätzliche Versiegelungsprozess bedeutet einen deutlichen Mehraufwand und es besteht die Gefahr, die teuren Druckklischees insbesondere bei Verwendung von Flüssig- oder Schmelzklebern bei der Demontage zu beschädigen.

Die EP 2 226 372 A1 offenbart eine Haftklebemasse auf Acrylatbasis für die Verklebung von Druckplatten auf Zylindern oder Hülsen, die einen hohen Acrylsäureanteil zwischen 8 und 15 Gew.-% aufweist. Weitere Monomere sind lineare und verzweigte Acrylsäureester, die in einem bestimmten Verhältnis zueinander vorliegen. Durch eine solche Klebemasse werden die Anforderungen bezüglich Kantenabhebeverhalten und Lösemittelbeständigkeit recht gut erfüllt. Haftklebemassen mit hohem Acrylsäureanteil neigen aber zu starkem Aufziehen auf polaren Substraten, wie beispielweise Stahl, aus dem Druckzylinder häufig bestehen. Zunehmend kommen auch Kunststoffsleeves, besonders häufig auf Polyurethanbasis, zum Einsatz. Die Massen auf der Druckhülsenseite müssen sowohl auf Stahl als auch auf niederenergetischen Hülsenoberflächen haften, was eine zusätzliche Herausforderung im Entwicklungsprozess darstellt. Dieses Problem stellt sich auch mit der Klebemasse der EP 2 226 372 A1, insbesondere wenn man sie auf der Seite des Klebebandes einsetzt, die zum Druckzylinder bzw. zur Druckhülse gerichtet ist. Daher ist die Demontage derartiger Klebemassen von solchen Untergründen mit Problemen verbunden; es treten sehr hohe Demontagekräfte auf, und es kann zum Bruch des eingesetzten Klebebandes kommen, oder es verbleiben Rückstände auf dem Substratuntergrund.

Um eine Haftklebemasse anzubieten, die auch unter dem Einfluss von Lösungsmitteln eine gute und sichere Verklebung auf im Flexodruck gängigen Material wie insbesondere auf PET (Polyethylenterephthalat) gewährleistet, sich aber dennoch auch nach längerer Zeit auch von sehr polaren Substraten - wie beispielsweise die Oberflächen von Druckzylindern aus Stahl oder die von polaren Kunststoffoberflächen bestimmter Druckhülsen - wieder ablösen lässt, wobei die Haftklebemasse bevorzugt insbesondere für das sichere Verkleben von Druckklischees geeignet sein sollte und wobei für ein Klebeband mit der Haftklebemasse die Stabilität des Klebebandverbundes, insbesondere die sichere Verankerung der Haftklebemasse auf Schaumträgern - wie polyolefinischen Schäumen - gewährleistet sein soll, offenbart die WO2014/001096 A1 eine Haftklebemasse auf Acrylatbasis, die 2 bis 20 Gew.-% eines N-Alkyl-substituierten Acrylamids und 5 bis 25 Gew.-% eines (Meth)Acrylesters mit einem linearen Alkylrest mit mindestens 12 C-Atomen sowie 0,5 bis 5 Gew.-% (Meth)Acrylsäure aufweist.

Solche Haftklebemassen weisen zwar gegenüber dem Stand der Technik verbesserte Eigenschaften auf, jedoch hat sich herausgestellt, dass die Verklebung der Druckplatten mit den an sich reversibel verklebenden Haftklebemassen durch Verunreinigungen in den Lösungsmitteln, mit denen die Druckplatten nach dem Druck gereinigt werden, geprimert werden.

Unter "Primern" bzw. als "primernder Effekt" wird dabei verstanden, dass im Vergleich zu mit reinem Lösungsmittel gereinigte Druckplatten, die Klebfestigkeit der Haftklebemasse auf den, durch enthaltene Farbreste in den Lösungsmitteln, verunreinigten Druckplatten signifikant erhöht wird.

Die Verunreinigungen stammen von Farbresten der Druckfarben in den Lösungsmitteln, die zum Reinigen verwendet werden, wobei bereits derart geringe Mengen an Verunreinigungen, die nicht einmal sichtbar sind, ausreichen, um diesen Effekt hervorzurufen. Auf diese Weise entstehen über die Zeit deutlich höhere Klebfestigkeiten, als dies zum Wiederablösen der Platten gewünscht ist. Die Druckplatten können teilweise nur unter sehr hohem Kraftaufwand abgelöst werden, wodurch sie auch beschädigt werden können, was eine Wiederverwendbarkeit der Platten unmöglich macht. Um dies zu vermeiden, ist der Drucker gezwungen, für jeden Reinigungsvorgang frisches Lösungsmittel und frische Reinigungstücher zu verwenden. Abgesehen davon, dass dies einen erhöhten Zeit- und Materialaufwand bedeutet, ist dies in der Praxis kaum umzusetzen. Gerade weil die vorhandenen Verschmutzungen mit dem Auge oftmals nicht zu erkennen sind, besteht keine Akzeptanz bei den Benutzern, Lösungsmittel und Reinigungstücher zu wechseln.

Aufgabe der vorliegenden Erfindung ist es daher, eine Haftklebemasse bereitzustellen, die bei der Verklebung von Druckplatten, insbesondere auf Druckzylindern und/oder Druckhülsen, neben den vorstehend genannten Anforderungen
- Gewährleistung einer guten und sicheren Verklebung auf im Flexodruck gängigen Material wie insbesondere auf PET (Polyethylenterephthalat), auch unter dem Einfluss von Lösungsmitteln
- Lösbarkeit auch nach längerer Zeit auch von sehr polaren Substraten wie beispielsweise den Oberflächen von Druckzylindern aus Stahl oder den Oberflächen von polaren Kunststoffoberflächen bestimmter Druckhülsen
- Eignung für das sichere Verkleben von Druckklischees; wobei für ein Klebeband mit der Haftklebemasse die Stabilität des Klebebandverbundes, insbesondere die sichere Verankerung der Haftklebemasse auf Schaumträgern - wie polyolefinischen Schäumen
- gewährleistet sein soll
auch dem unerwünschten primernden Effekt der Druckfarbenrückstände in den Lösungsmitteln, mit denen die Druckplatten gereinigt werden, entgegenwirkt und damit eine sogenannte "Ink Resistance" aufweist, weil sie unempfindlich gegen den Einfluss der Druckfarbenreste im Reinigungslösungsmittel ist. Die Klebfestigkeit der Haftklebemasse auf derart verunreinigten Oberflächen kann mit einer physikalischen Verankerung gleichgesetzt werden, dessen Verursacher auf zumindest ein in Druckfarben enthaltenes Bindemittel (auch Filmbildner genannt) zurückgeführt werden kann. Ein in Druckfarben üblich eingesetztes Bindemittel ist u.a. Cellulosenitrat (umgangssprachlich "Nitrocellulose"), welches an der Verklebungsfläche eine Wechselwirkung mit der Haftklebemasse ausbilden kann und damit diesen Primereffekt bekanntermaßen verursacht.

Diese Aufgabe wird mit einer Haftklebemasse für die Verklebung von Druckplatten, insbesondere auf Druckzylindern und/oder Druckhülsen, der eingangs genannten Art dadurch gelöst, dass die Haftklebemasse des Weiteren 7 bis 30 Gew.-%, vorzugsweise 7 bis 25 Gew.-%, besonders bevorzugt 7 bis 20 Gew.-%, und insbesondere 10 bis 15 Gew.-%, jeweils bezogen auf die Gesamtabmischung ohne Lösungsmittel, eines Polyvinylacetats enthält.

Überraschenderweise zeigte sich, dass der Zusatz der erfindungsgemäßen Polyvinylacetate die Widerstandsfähigkeit der Haftklebemasse gegen Einflüsse der Druckfarbenrückstände maßgeblich reduziert. Dies äußert sich darin, dass der (durch die auf der Oberflächen befindlichen Farbrückstände, erhöhte) Kraftaufwand, der erforderlich ist, um ein Klischee von dem Zylinder oder der Hülse abzulösen, gering ist. Insbesondere ist der Kraftaufwand gegenüber dem Kraftaufwand, der für ein Ablösen mit derselben Haftklebemasse ohne Einfluss der Druckfarbenrückstände erforderlich ist, nur geringfügig, vorzugsweise nur unmerklich, insbesondere gar nicht, erhöht.

Unter dem Begriff "Haftklebemasse" (PSA; englisch: "pressure sensitive adhesives") werden wie üblich solche viskoelastischen, polymeren Massen verstanden, die - gegebenenfalls durch geeignete Additivierung mit weiteren Komponenten, wie beispielsweise Klebharzen - bei der Anwendungstemperatur (sofern nicht anders definiert, bei Raumtemperatur, also 23 °C) dauerhaft klebrig und permanent klebfähig sind und an einer Vielzahl von Oberflächen bei Kontakt anhaften, insbesondere sofort anhaften (die einen sogenannten "Tack" [auch als Klebrigkeit oder Anfassklebrigkeit bezeichnet] aufweisen). Sie sind in der Lage, bereits bei der Anwendungstemperatur ohne eine Aktivierung durch Lösemittel oder durch Wärme - gegebenenfalls unter Einfluss eines mehr oder weniger hohen Druckes - ein zu verklebendes Substrat hinreichend zu benetzen, damit sich zwischen der Masse und dem Substrat für die Haftung hinreichende Wechselwirkungen ausbilden können.

Haftklebemassen bestehen üblicherweise aus einer Polymerkomponente, auch als Basispolymerkomponente bezeichnet, die ein Homopolymer, ein Copolymer oder eine Mischung aus Polymeren (Homopolymeren und/oder Copolymeren) sein kann, und gegebenenfalls Zusätzen (Cokomponenten, Additiven) zum Teil in erheblichem Umfang. Der Ausdruck "Polymerkomponente auf Basis einer Monomermischung" bedeutet dabei wie allgemein üblich, dass das Polymer durch - insbesondere radikalische - Polymerisation der entsprechenden Monomermischung erhalten werden kann, insbesondere durch ein Verfahren wie im experimentellen Teil beschrieben.

Haftklebemassen können grundsätzlich auf Grundlage von Polymeren unterschiedlicher chemischer Natur hergestellt werden. Die haftklebenden Eigenschaften werden unter anderem durch die Art und die Mengenverhältnisse der eingesetzten Monomere - also die Zusammensetzung der Monomermischung - bei der Polymerisation der der Haftklebemasse zugrunde liegenden Polymere, mittlere Molmasse und Molmassenverteilung der Polymere sowie durch optionale Beimischung von Zusatzstoffen (Art und Menge) beeinflusst.

Zur Erzielung der viskoelastischen Eigenschaften werden die Monomere, auf denen die der Haftklebemasse zugrunde liegenden Polymere basieren, sowie die gegebenenfalls vorhandenen weiteren Komponenten der Haftklebemasse insbesondere derart gewählt, dass die Haftklebemasse eine Glasübergangstemperatur T_{G} unterhalb der Anwendungstemperatur (also üblicherweise unterhalb der Raumtemperatur) aufweisen.

Unterhalb der Glasübergangstemperatur T_{G} verhalten sich Haftklebemassen sprödelastisch (glasartig-amorph bzw. teilkristallin); hier kann kein haftklebriges Verhalten ausgebildet werden. Oberhalb der Glasübergangstemperatur T_{G} erweichen die Massen mit zunehmender Temperatur je nach Zusammensetzung mehr oder weniger stark und nehmen in einem bestimmten Temperaturbereich die für die haftklebrigen Eigenschaften geeigneten Viskositätswerte an, bevor sie bei noch höheren Temperaturen zu dünnflüssig werden, um noch haftklebrige Eigenschaften zu besitzen (es sei denn, sie zersetzen sich vorher).

Glasübergangstemperaturen werden angegeben als Ergebnis von Messungen mittels dynamischer Differenzkalorimetrie DDK gemäß der DIN 53 765; insbesondere Abschnitte 7.1 und 8.1, jedoch mit einheitlichen Heiz- und Kühlraten von 10 K/min in allen Heiz- und Kühlschritten (vergl. DIN 53 765; Abschnitt 7.1; Anmerkung 1). Die Probeneinwaage beträgt 20 mg. Eine Vorbehandlung der Haftklebemasse wird durchgeführt (vgl. Abschnitt 7.1, erster Lauf). Temperaturgrenzen: - 140 °C (statt T_{G} - 50 °C) / + 200 °C (statt T_{G} + 50 °C). Die angegebene Glasübergangstemperatur T_{G} ist die Probentemperatur im Heizvorgang des zweiten Laufs, bei der die Hälfte der Änderung der spezifischen Wärmekapazität erreicht ist.

Die Angabe der Glasübergangstemperaturen als Charakteristikum der eingesetzten Monomere erfolgt in Bezug auf deren jeweiliges Homopolymer, das nach der Synthesevorschrift für Acrylathaftklebemassen im experimentellen Teil erhältlich ist, wobei statt der Monomermischung 400 g der jeweiligen Monomere eingesetzt wurden. Bestimmung des T_{G} erfolgt nach Entfernung des Lösemittels im unvernetzten Zustand (in Abwesenheit von Vernetzern).

Ein weiteres Kriterium für die Eignung als Haftklebemasse ist die Kohäsion. Üblicherweise muss die Polymermasse eine hinreichende Kohäsion aufweisen, um bei der Verklebung die Haftung vermitteln zu können und nicht aus der Klebefügung zu fließen. Durch geeignete kohäsionssteigernde Maßnahmen, wie beispielsweise Vernetzungsreaktionen (Ausbildung brückenbildender Verknüpfungen zwischen den Makromolekülen), kann der Temperaturbereich, in dem eine Polymermasse haftklebrige Eigenschaften aufweist, eingestellt, vergrößert und/oder verschoben werden. Der Anwendungsbereich der Haftklebemassen kann somit durch eine Einstellung zwischen Fließfähigkeit und Kohäsion der Masse optimiert werden.

Das als Additiv zugesetzte Polyvinylacetat weist eine Molmasse M_{w} von 10.000 bis 100.000 g/mol, insbesondere von 10.000 bis 90.000 g/mol, besonders bevorzugt von 10.000 bis 75.000 g/mol und ganz besonders bevorzugt von 15.000 bis 25.000 g/mol auf, welche mittels Gelpermeationschromatographie bestimmt wird, unter Verwendung einer 100 µl klarfiltrierter Probe bei einer Probenkonzentration von 4 g/l, Tetrahydrofuran mit 0,1 Vol.-% Trifluoressigsäure als Eluent bei 25 °C, wobei als Vorsäule eine Säule Typ PSS-SDV, 5 µ, 10³ Å, ID 8,0 mm x 50 mm verwendet wird und zur Auftrennung die Säulen des Typs PSS-SDV, 5 µ, 10³ Å sowie 10⁵ Å und 10⁶ Å mit jeweils ID 8,0 mm x 300 mm eingesetzt werden, die Durchflussmenge 1,0 ml pro Minute beträgt und die Kalibrierung bezogen auf Polymethylmethacrylat-Standards erfolgt.

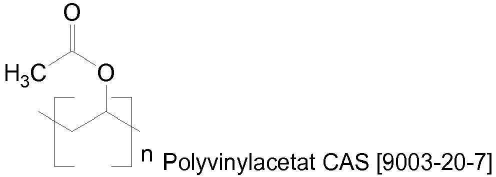

Mit Polyvinylacetaten dieser Molmassen kann eine gute Ink Resistance bei gleichzeitig gutem Montageverhalten erreicht werden. So haften die Druckklischees sicher auf den Zylindern bzw. Druckhülsen, und zwar einschließlich der Kanten, d.h. ein Kantenabheben kann vermieden werden.

In einer bevorzugten Ausführungsform enthält die Monomermischung, die Basis für die zumindest eine Polymerkomponente der Haftklebekomponente der Haftklebemasse der vorliegenden Erfindung ist, mindestens folgende Monomere
a) 20 bis 99,5 Gew.-% zumindest eines Acrylsäureesters und/oder Methacrylsäureesters, dessen Homopolymer eine statische Glasübergangstemperatur von < 0°C, vorzugsweise < -10°C, insbesondere <- 20°C, aufweist;
b) 0 bis 40 Gew.-% zumindest eines Acrylsäureesters und/oder Methacrylsäureesters, dessen Homopolymer eine statische Glasübergangstemperatur von > 0°C, vorzugsweise > 10°C, insbesondere > 20°C, aufweist;
c) 0,5 bis 20 Gew.-% Acrylsäure und/oder Methacrylsäure,
d) 0 bis 25 Gew-% weiterer copolymerisierbarer Monomere, wobei
die Mengenangaben jeweils auf die Monomermischung bezogen sind.

Dabei sind bevorzugte Mengen für die Komponente a) 50 bis 90 Gew.-% und insbesondere 60 bis 80 Gew.-%, für die Komponente b) 5 bis 30 und insbesondere 10 bis 25 Gew.-%, und für die Komponente c) 1 bis 15 Gew.-% und insbesondere 3 bis 12 Gew.-%. Bei den "weiteren copolymerisierbaren Monomeren" unter d) handelt es sich dabei um solche, die nicht unter die Definitionen gemäß a) bis c) fallen.

In einer bevorzugten Ausführungsform enthält die Monomermischung, die Basis für die zumindest eine Polymerkomponente der Haftklebekomponente der Haftklebemasse der vorliegenden Erfindung ist, mindestens folgende Monomere:
i.a) 50 - 99,5 Gew.-% zumindest eines Acrylsäureesters und/oder Methacrylsäureesters mit der folgenden Formel

   CH₂=C(R₁)(COOR₂),

   wobei
   R₁ = H und R₂ ein linearer Alkylrest mit 2 bis 10 C-Atomen oder ein verzweigter, nichtcyclischer Alkylrest mit mindestens 4 C-Atomen ist und/oder
   R₁ = CH₃ und R₂ ein linearer Alkylrest mit 8 bis 10 C-Atomen oder ein verzweigter, nichtcyclischer Alkylrest mit mindestens 10 C-Atomen ist
i.b) 0 bis 40 Gew.-% zumindest eines Acrylsäureesters und/oder Methacrylsäureesters mit der folgenden Formel:

   CH₂=C(R₃)(COOR₄),

   wobei
   R₃ = H oder CH₃ und R₄ ein linearer Alkylrest mit mindestens 12 C-Atomen, vorzugsweise ein Stearylrest, ist
i.c) 0,5 - 20 Gew.-% Acrylsäure und/oder Methacrylsäure,
i.d) 0 - 20 Gew.-% zumindest ein N-Alkyl-substituiertes Acrylamid, wobei
die Mengenangaben jeweils auf die Monomermischung bezogen sind.

Eine Klebemasse mit mindestens einer Polymerkomponente auf Basis solcher Monomermischung ist zur lösbaren Befestigung flexibler Druckplatten besonders geeignet, da sich die Druckplatten mit ihrer Hilfe zum einen gut und sicher fixieren lassen, zum anderen das Ablösen problemlos möglich ist, und zwar auch wenn die Druckplatten mit Lösungsmittel gereinigt wurden, das durch Druckfarbreste verunreinigt ist.

Dabei sind bevorzugte Mengen für die Komponente i.a) 50 bis 90 Gew.-%, besonders bevorzugt 60 bis 80 Gew.-% und insbesondere 65 bis 75 Gew.-%, für die Komponente i.b) 5 bis 30 Gew.-%, besonders bevorzugt 10 bis 20 Gew.-% und insbesondere 12 bis 16 Gew.-%, für die Komponente i.c) 0,5 bis 15 Gew.-%, besonders bevorzugt 0,5 bis 8 Gew.-% und insbesondere 0,5 bis 5 Gew.-%, und für die Komponente i.d) 5 bis 15 und insbesondere 7 bis 12 Gew.-%,.

Als Monomere der Gruppe i.a), werden insbesondere Ester der Acrylsäure mit linearen Alkoholen mit 2 bis 10 C-Atomen und/oder Ester der Acrylsäure mit verzweigten Alkoholen mit mindestens 4 C-Atomen und/oder Ester der Methacrylsäure mit linearen Alkoholen mit 8 bis 10 C-Atomen und/oder Ester der Methacrylsäure mit verzweigten Alkoholen mit mindestens 10 C-Atomen ausgewählt.

### Polymerkomponente

Die Polymerkomponente der erfindungsgemäßen Haftklebemasse umfasst ein oder mehrere Polymere, von denen zumindest eines, bevorzugt alle Polymere auf einer Monomermischung umfassend mindestens die vorstehend definierten Monomere i.a) bis i.d) basieren (also aus einer solchen Monomermischung durch Polymerisation erhältlich sind).

Sehr bevorzugt handelt es sich bei der bzw. den Polymeren, die die Polymerkomponente bilden, um solche Polymere, die im Wesentlichen ausschließlich auf Acrylmonomere zurückzuführen sind. Als Acrylmonomere - auch als (Meth)Acrylmonomere bezeichnet - werden im Rahmen dieser Schrift solche Monomere verstanden, die Derivate der Acrylsäure oder der Methacrylsäure sind, einschließlich der genannten Säuren selbst.

Sehr bevorzugt handelt es sich bei der erfindungsgemäßen Haftklebemasse um eine solche, bei der die Polymerkomponente zu mehr als 99 Gew.-%, insbesondere zu 100 Gew.-% auf (Meth)Acrylmonomeren basiert, insbesondere ausschließlich auf solchen (Meth)Acrylmonomeren gemäß der Definitionen i.a) bis i.d). Die oben angeführte Monomeraufstellung für die Polymere der erfindungsgemäßen Haftklebemasse kann somit - im Wesentlichen - abschließend sein, so dass die Monomermischung zur Polymerisation der Polymerkomponente nicht mehr als 1 Gew.-%, insbesondere keine weiteren Comonomere umfasst und insbesondere gilt, dass die Monomermischung außer den genannten Monomeren i.a) bis i.d) weder andere Acrylmonomere noch sonstige anderen Monomere enthält (und somit aus den Monomeren i.a) bis i.d) besteht). Umfasst die Polymerkomponente mehr als ein Polymer, so ist bevorzugt zumindest eines der Polymere, sehr bevorzugt alle Polymere zu mehr als 99 Gew.-%, bevorzugt ausschließlich (zu 100 Gew.-%) auf eine Monomermischung aus den Monomeren i.a) bis i.d) zurückzuführen.

In einer weiteren Ausführungsform der erfindungsgemäßen Haftklebemasse ist es aber auch möglich, dass die Polymerkomponente auf einer Monomermischung basiert, die zusätzlich zu den Monomeren i.a) bis i.d) bis zu 10 Gew.-%, bezogen auf die Monomermischung, copolymerisierbare weitere Monomere umfasst. Solche copolymerisierbaren weiteren Monomere im Sinne der Gruppe können beispielweise ganz oder teilweise solche mit zumindest einer einfach oder mehrfach ungesättigten Kohlenstoff-Kohlenstoff-Bindung und/oder ganz oder teilweise solche mit zumindest einer einfach oder mehrfach ungesättigten Kohlenstoff-Heteroatom-Bindung sein. Die Comonomere können dabei Acrylmonomere (so dass die Polymerkomponente ein Reinacrylatsystem bleibt; zum Beispiel solche Acrylmonomere, deren Glasübergangstemperatur größer als 20 °C ist; insbesondere wenn diese derart gewählt sind (Art und relative Menge zur Komponente i.a)), dass die Glasübergangstemperatur des resultierend Polymeren 20 °C nicht übersteigt) und/oder nichtacrylische Monomere sein.

Die Monomere der Monomermischung, insbesondere (Meth)Acrylmonomere der Definitionen gemäß i.a) und/oder i.b) und/oder gegebenenfalls vorhandene Comonomere, können Hydroxygruppen enthalten, es kann aber erfindungsgemäß hervorragend auf die Anwesenheit von Hydroxygruppen in der Monomermischung - und entsprechend in der resultierenden Polymerkomponente - verzichtet werden, ohne dass dies eine negative Auswirkung auf die Eigenschaften der erfindungsgemäßen Haftklebemasse hätte.

Die vorteilhafte Haftklebemasse zeichnet sich dadurch aus, dass außer den vorgenannten Funktionalitäten - Carboxylgruppen, N-Alkyl-substituierte Acrylamide, optional Hydroxygruppen, wobei auf letztere aber vorteilhaft verzichtet wird - und (Meth)Acrylsäureestern, die bevorzugt nicht heterosubstituiert vorliegen, keine weiteren funktionellen Gruppen - wie beispielweise Sulfonsäuregruppen, Lactamgruppen, Lactongruppen, N-heterosubstituierte Amidgruppen, N-substituierte Amingruppen, Carbamatgruppen, Epoxygruppen, Thiolgruppen, Alkoxygruppen, Ethergruppen, Cyangruppen, Halogenidsubstituenten, um nur einige zu nennen - an den Monomeren vorhanden sein müssen, so dass solche funktionellen Gruppen auch in den resultierenden Polymeren nicht auftreten. Vorteilhaft ist also eine erfindungsgemäße Haftklebemasse, deren Makromoleküle frei von funktionellen Gruppen ist, die nicht in der Definition der Monomere gemäß den Gruppen i.a) bis i.d) genannt sind.

Die Polymere der Polymerkomponente der vorteilhaften Haftklebemasse weisen insbesondere vorteilhaft eine zahlenmittlere Molmasse Mₙ zwischen 10 000 g/mol und 600 000 g/mol, bevorzugt zwischen 30 000 g/mol und 400 000 g/mol, besonders bevorzugt zwischen 50 000 g/mol und 300 000 g/mol auf. Ihre gewichtsmittlere Molmasse M_{w} sollte bevorzugt in einem Bereich zwischen 500 000 und 3 000 000 g/mol liegen, besonders bevorzugt zwischen 800 000 g/mol und 2 200 000 g/mol. Insbesondere liegen die Polydispersitäten M_{w}/Mₙ zwischen 5 und 40.

Angaben zu Molmassen (zahlenmittlere und gewichtsmittlere) und Polydispersitäten im Rahmen dieser Schrift beziehen sich auf die Bestimmung per Gelpermeationschromatographie. Die Bestimmung erfolgt an 100 µl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 µ, 10³ Å, ID 8,0 mm x 50 mm verwendet. Zur Auftrennung werden die Säulen des Typs PSS-SDV, 5 µ, 10³ Å sowie 10⁵ Å und 10⁶ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt bezogen auf PMMA-Standards (Polymethylmethacrylat-Kalibrierung).

### Monomere

Als Monomere im Sinne der Gruppe i.a) werden bevorzugt solche Monomere ausgewählt, deren Homopolymer eine Glasübergangstemperatur T_{G} von höchstens - 20 °C aufweist. Diese sind insbesondere Ester der Acrylsäure mit linearen Alkoholen mit 2 bis 10 C-Atomen oder verzweigten Alkoholen mit mindestens 4 C-Atomen und Ester der Methacrylsäure mit linearen Alkoholen mit 8 bis 10 C-Atomen oder verzweigten Alkoholen mit mindestens 10 C-Atomen. Als spezifische erfindungsgemäße Beispiele werden bevorzugt ein oder mehrere Mitglieder gewählt aus der Gruppe umfassend
n-Propylacrylat, n-Butylacrylat, n-Pentylacrylat, n-Hexylacrylat, n-Heptylacrylat, n-Octylacrylat, n-Octylmethacrylat, n-Nonylacrylat, n-Nonylmethacrylat, n-Decylacrylat, n-Decylmethacrylat, Isobutylacrylat, Isopentylacrylat, Isooctylacrylat, Isooctylmethacrylat, die verzweigten Isomere der vorgenannten Verbindungen, wie zum Beispiel 2-Ethylhexylacrylat, 2-Ethylhexylmethacrylat, 2-Propylheptylacrylat.

Als N-Alkyl-substituiertes Acrylamid im Sinne der Monomergruppe i.b) werden bevorzugt N-n-Butylacrylamid, N-sec-Butylacrylamid, N-Octylacrylamid, N-Isopropylacrylamid, N,N-Diisopropylacrylamid, N,N-Dibutylacrylamid, N,N-Dimethylacrylamid und/oder N,N-Diethylacrylamid, ganz besonders bevorzugt N-tert-Butylacrylamid eingesetzt.
Die erfindungsgemäß eingesetzten N-Alkyl-substituierten Acrylamide weisen bevorzugt keine weiteren Heterosubstituenten auf, insbesondere nicht am Stickstoffatom.

Die Monomere der Gruppe i.b) sind solche, die im Polymer zu einer erhöhten Neigung zur Ausbildung teilkristalliner Bereiche führen. Dieses Verhalten wird festgestellt für Acrylsäureester und Methacrylsäureester mit einem linearen Alkylrest mit mindestens 12 C-Atomen im Alkoholrest, bevorzugt von mindestens 14 C-Atomen im Alkoholrest. Im Sinne der Monomergruppe i.b) lassen sich erfindungsgemäß besonders vorteilhaft beispielweise Stearylacrylat und/oder Stearylmethacrylat einsetzen.

Sofern Comonomere vorhanden sind, werden diese beispielweise ganz oder teilweise gewählt aus der Gruppe umfassend Vinylverbindungen wie Vinylester, Vinylether, Vinylhalogenide, Vinylidenhalogenide, Vinylverbindungen mit aromatischen Cyclen und Heterocyclen, insbesondere in α-Stellung zur Doppelbindung. Aber auch andere mit Acrylmonomeren copolymerisierbare Verbindungen sind hier einsetzbar.

In einer anderen bevorzugten Ausführungsform enthält die Monomermischung, die Basis für die zumindest eine Polymerkomponente der Haftklebekomponente der Haftklebemasse der vorliegenden Erfindung ist, mindestens folgende Monomere
ii.a) 49,5 - 89,5 Gew.-% zumindest eines Acrylsäureesters und/oder Methacrylsäureesters bzw. deren freien Säuren mit der folgenden Formel

   CH₂=C(R₅)(COOR₆),

   wobei
   R5 = H oder CH₃ und R₆ ein Alkylrest mit 1 bis 10 C-Atomen oder H ist und das Homopolymer eine statische Glasübergangstemperatur von < -30°C aufweist;
ii.b) 10 bis 40 Gew.-% zumindest eines Acrylsäureesters und/oder Methacrylsäureesters mit der folgenden Formel

   CH₂=C(R₇)(COOR₈),

   wobei
   R₇ = H oder CH₃ und R₈ ein zyklischer Alkylrest mit mindestens 8 C-Atomen oder ein linearer Alkylrest mit mindestens 12 C-Atomen ist und das Homopolymer eine statische Glasübergangstemperatur T_{G} von mindestens 30°C aufweist;
ii.c) 0,5 bis 10 Gew.-% zumindest eines Acrylsäureester und/oder Methacrylsäureesters bzw. deren freien Säuren mit der folgenden Formel:

   CH₂=C(R₉)(COOR₁₀),

   wobei
   Rg = H oder CH₃ und R₁₀ = H oder ein aliphatischer Rest mit einer funktionellen Gruppe X, wobei X = COOH, OH, -NH(R₁₁), SH, SO₃H umfasst und das Homopolymer eine statische Glasübergangstemperatur T_{G} von mindestens 30°C aufweist, wobei R₁₁ = H oder ein linearer oder verzweigter Alkylrest mit bis zu 10 C-Atomen ist,
wobei die Mengenangaben jeweils auf die Monomermischung bezogen sind.

(Meth) Acrylmonomere, die sehr bevorzugt im Sinne von ii. a) als Komponente eingesetzt werden, umfassen Acryl- und Methacrylsäureester mit Alkylgruppen bestehend aus 1 bis 10 C-Atomen. Spezifische Beispiele für entsprechende Verbindungen sind, ohne sich durch diese Aufzählung einschränken zu wollen, n-Butylacrylat, n-Pentylacrylat, n- Hexylacrylat, n-Heptylacrylat, n-Octylacrylat, n-Nonylacrylat, 2-Ethylhexylacrylat und Isooctylacrylat.

(Meth) Acrylmonomere, die sehr bevorzugt im Sinne von ii. b) als Komponente eingesetzt werden, umfassen Acryl-und Methacrylsäureester mit einem zyklischen Alkylrestes mit mindestens 8 C-Atomen oder einem linearen Alkylrestes mit mindestens 12 C-Atomen. Spezifische Beispiele sind z. B. n-Laurylacrylat, Stearylacrylat, Isobornylacrylat, Isobor- nylmethacrylat und Norbonylacrylat, wobei diese Aufzählung keinen Anspruch auf Voll- ständigkeit besitzt.

(Meth) Acrylmonomere, die sehr bevorzugt im Sinne von ii. c) als Komponente eingesetzt werden, umfassen die freien Säuren sowie aliphatische Reste mit einer funktionellen Gruppe X, wobei X = COOH, OH, -NH(R₁₁), SH, SO₃H, wobei R₁₁ = H oder ein linearer oder verzweigter Alkylrest mit bis zu 10 C-Atomen ist. Spezifische Beispiele für ent- sprechende Verbindungen sind, ohne sich durch diese Aufzählung einschränken zu wollen, Hydroxyethylacrylat, Hydroxypropylacrylat, Hydroxyethylmethacrylat, Hydroxypro- pylmethacrylat, N-Methylolacrylamid, Acrylsäure, Methacrylsäure, Allylalkohol, Maleinsäu- reanhydrid, Itaconsäureanhydrid und Itaconsäure. In einer weiteren günstigen Ausführungsform sind die Monomere ii. c) derart funktionalisiert, dass eine thermisch initiierte Vernetzung durchgeführt werden kann. Als Vernetzer können unter anderem in günstiger Weise gewählt werden: Epoxide, Aziridine, Isocyanate, Polycarbodiimide und Metallchelate, um nur einige zu nennen.

Ein bevorzugtes Charakteristikum der für die bevorzugten Haftklebesysteme eingesetzten Copolymere ist, dass ihre Molmasse Mₙ, zwischen ca. 10.000 und ca. 600.000 g/mol, bevorzugt zwischen 30.000 und 400.000 g/mol, besonders bevorzugt zwischen 50.000 g/mol und 300.000 g/mol liegt.

In noch einer anderen bevorzugten Ausführungsform enthält die Monomermischung, die Basis für die zumindest eine Polymerkomponente der Haftklebekomponente der Haftklebemasse der vorliegenden Erfindung ist, mindestens folgende Monomere
iii.a) 25 bis 82 Gew.-% lineare Acrylsäureester mit 2 bis 10 C-Atomen im Alkylrest,
iii.b) 10 bis 40 Gew.-% verzweigte nichtzyklische Acrylsäureester mit einer statischen Glasübergangstemperatur T_{G} von nicht mehr als 0°C, vorzugsweise nicht mehr als -10°C, insbesondere nicht mehr als -20°C,
iii.c) 8 bis 15 Gew.-% Acrylsäure, bezogen auf die Gesamtmenge zu polymerisierender Monomere,
iii.d) gegebenenfalls bis zum 10 Gew.-% weiterer copolymerisierbarer Monomere, bezogen auf die Gesamtmenge zu polymerisierender Monomere,
wobei das Verhältnis der linearen Acrylsäureester zu den verzweigten Acrylsäureestern im Bereich von 1:6 bis 10:1 Masseanteilen liegt.

Dabei sind bevorzugte Mengen für die Komponente iii.b) 50 bis 75 und insbesondere 55 bis 65 Gew.-%, und für die Komponente iii.a) 20 bis 40 Gew.-%, besonders bevorzugt 25 bis 35 Gew.-%.

In einer besonders bevorzugten Ausgestaltung umfasst die Haftklebemasse nur eine Basispolymerkomponente, insbesondere vorteilhaft beschränkt sich die Basispolymerkomponente auf die Komponenten iii.a) bis iii.c), so dass der Basispolymerkomponente keine weiteren copolymerisierbaren Monomere außer linearen Acrylsäureestern mit 2 bis 14 C-Atomen im Alkylrest, verzweigte nichtzyklische Acrylsäureester mit einer Glasübergangstemperatur T_{G} von nicht mehr als - 20 °C und Acrylsäure in den vorstehend genannten Gewichtsanteilen zugrunde liegen.

Lineare Acrylsäureester mit 2 bis 10 C-Atomen im Alkylrest sind Ethylacrylat, n-Propylacrylat, n-Butylacrylat, n-Pentylacrylat, n-Hexylacrylat, n-Heptylacrylat, n-Octylacrylat, n-Nonylacrylat, n-Decylacrylat.

Verzweigte nichtzyklische Acrylsäureester mit einer Glasübergangstemperatur T_{G} (bezogen auf die DSC-Messung nach DIN 53765) von nicht mehr als -20°C sind solche Acrylsäureester, deren Homopolymere eine Glasübergangstemperatur T_{G} von nicht mehr als -20°C aufweisen. Bevorzugt werden als solche verzweigte nichtzyklische Acrylsäureester C4-C12-Alkylester der Acrylsäure eingesetzt, die bevorzugt ausgewählt werden aus der Gruppe bestehend aus 2-Ethylhexylacrylat (EHA), 2-Propylheptylacrylat, Isooctylacrylat, iso-Butylacrylat, iso-Amylacrylat und/oder iso-Decylacrylat. Erfindungsgemäß besonders vorteilhaft hat sich gezeigt, wenn als verzweigte nichtzyklische Acrylsäureester 2-Ethylhexylacrylat (EHA), 2-Propylheptylacrylat und/oder Isooctylacrylat (genauer: die Acrylsäureester, bei denen die Alkoholkomponente auf ein Gemisch primärer Isooctanole zurückzuführen ist, also auf solche Alkohole, die aus einem Isohepten-Gemisch durch Hydroformylierung u. anschließende Hydrierung gewonnen werden können) eingesetzt werden.

Sehr bevorzugt ist eine Haftklebemasse, deren Basispolymer auf genau einem Monomer der Sorte iii.a), einem Monomer der Sorte iii.b) und Acrylsäure beruht, wobei besonders bevorzugt als Monomer der Sorte iii.a) Butylacrylat und als Monomer der Sorte iii.b) 2-Ethylhexylacrylat gewählt wird.

Mit dem Anteil an Acrylsäure in der Basispolymerkomponente lässt sich die Eignung im gewünschten Anwendungsbereich hervorragend einstellen. Mit zunehmendem Acrylsäureanteil sinkt die Qualität im Montageverhalten bei niedrigen Temperaturen (Temperaturen unterhalb der Raumtemperatur), steigt aber die Qualität bezüglich des Kantenabhebens unter Lösungsmitteleinfluss (im Folgenden als "Lösungsmittelbeständigkeit" oder "Solvent Resistance" definiert; quantifizierbar mittels Testmethode 2: Lösungsmittelbeständigkeit).

Ein Acrylsäureanteil von 7 bis 10 Gew.-%, bevorzugt von mindestens 9 Gew.-% zeigt bei niedrigen Temperaturen (Temperaturen unterhalb der Raumtemperatur, hier beispielhaft 15 °C) noch ein sehr gutes Montageverhalten und bereits eine befriedigende Lösungsmittelbeständigkeit. Erhöht man bei gleich bleibendem Verhältnis von linearem Acrylsäureester (beispielhaft Butylacrylat) zu verzweigtem nichtzyklischem Acrylsäureester (beispielhaft 2-Ethylhexylacrylat) den Acrylsäure-Anteil auf mindestens 10 %, so lässt sich das Kantenabhebeverhalten noch verbessern, während allerdings das Montageverhalten bei niedrigen Temperaturen nachlässt, aber bei Temperaturen um Raumtemperatur und darüber noch hervorragend bleibt. So ist beispielsweise bei 11 Gew.-% Acrylsäure noch ein befriedigendes Montageverhalten bei erniedrigten Temperaturen (beispielsweise 15 °C) und bereits eine gute Lösungsmittelbeständigkeit festzustellen. Legt man auf das Montageverhalten bei niedrigen Temperaturen weniger Wert, so lässt sich durch weitere Erhöhung des Acrylsäureanteils, etwa auf 12 Gew.-% (noch hinreichendes Montageverhalten bei niedrigen Temperaturen) oder auf 13 Gew.-% (insbesondere für Montage bei erhöhten Temperaturen) eine hervorragende Lösungsmittelbeständigkeit feststellen.

Als optional bis zu 10 Gew.-% eingesetzte weitere copolymerisierbare Monomere können ohne besondere Einschränkung alle dem Fachmann bekannten radikalisch polymerisierbaren C=C-Doppelbindungs-haltigen Monomere oder Monomergemische verwendet werden. Beispielhaft genannte Monomere hierfür sind:
Methylacrylat, Ethylacrylat, Propylacrylat, Methylmethacrylat, Ethylmethacrylat, Benzylacrylat, Benzylmethacrylat, sec.-Butylacrylat, tert-Butylacrylat, Phenylacrylat, Phenylmethacrylat, Isobornylacrylat, Isobornylmethacrylat, t-Butylphenylacrylat, t-Butylaphenylmethacrylat, Dodecylmethacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxy-ethylacrylat, 3,3,5-Trimethylcyclohexylacrylat, 3,5-Dimethyladamantylacrylat, 4-Cumyl-phenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufuryl-acrylat, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxy-ethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, N-(1-Methyl-undecyl)acrylamid, N-(n-Butoxymethyl)acrylamid, N-(Butoxymethyl)methacrylamid, N-(Ethoxymethyl)acrylamid, N-(n-Octadecyl)acrylamid, weiterhin N,N-Dialkyl-substituierte Amide, wie beispielsweise N,N-Dimethylacrylamid, N,N-Dimethylmethacrylamid, N-Benzylacrylamide, N-Isopropylacrylamid, N-tert-Butylacrylamid, N-tert-Octylacrylamid, N-Methylolacrylamid, N-Methylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, N-Vinylphthalimid, N-Vinyllactam, N-Vinylpyrrolidon, Styrol, α- und p-Methylstyrol, α-Butylstyrol, 4-n-Butylstyrol, 4-n-Decylstyrol, 3,4-Dimethoxystyrol. Makromonomere wie 2-Polystyrolethylmethacrylat (Molmasse Mw von 4000 bis 13000 g/mol), Poly(Methylmethacrylat)ethylmethacrylat (Mw von 2000 bis 8000 g/mol).

Die beispielhaft genannten Monomere können vorteilhaft auch derart gewählt werden, dass sie funktionelle Gruppen enthalten, die eine nachfolgende strahlenchemische Vernetzung (beispielsweise durch Elektronenstrahlen, UV) unterstützen.

Weiterhin hat sich bei der Variation des Verhältnisses von linearem Acrylsäureester zu verzweigten nichtzyklischen Acrylsäureester gezeigt, dass ein Minderanteil sowohl an linearer Acrylsäureesterkomponente oder an verzweigter Acrylsäureesterkomponente inakzeptabel ist, da das Montageverhalten bei niedrigen Temperaturen nicht befriedigend ist und selbst bei Raumtemperatur keine guten Werte annimmt.

Bevorzugt liegt das Verhältnis der linearen Acrylsäureester zu den verzweigten Acrylsäureestern im Bereich von 1 : 5 bis 9 : 1, bevorzugt im Bereich von 1 : 3 bis 5 : 1 insbesondere im Bereich von 1 : 2 bis 4 : 1 Masseanteilen, um ein hinreichend gutes Montageverhalten bei Raumtemperatur oder höher zu gewährleisten. Besonders bevorzugt wählt man das Verhältnis der linearen Acrylsäureester zu den verzweigten Acrylsäureestern im Bereich von 1,5 : 1 bis 3,5 : 1, insbesondere bei 2 : 1 bis 3 : 1 Masseanteilen, da sich hier das beste Montageverhalten auch noch bei niedrigen Temperaturen (beispielsweise 15 °C) zeigt. Derartige Haftklebemassen sind also auch noch hervorragend im Tieftemperaturbereich einsetzbar.

Die vorstehenden Ausführungen (Acrylsäureanteil, Verhältnis der Komponenten zueinander) gelten grundsätzlich auch für die übrigen als erfindungsgemäß vorteilhaft angegebenen linearen Acrylsäureester und verzweigten nichtzyklischen Acrylsäureester.

### Vernetzung

Um die optimalen Eigenschaften der erfindungsgemäßen Haftklebemasse zu erhalten, sollte diese sehr bevorzugt vernetzt werden.

Eine Methode zur Charakterisierung des Vernetzungszustandes einer Haftklebemasse ist die Bestimmung deren Scherverhaltens. Hierzu dient beispielsweise die Ermittlung der Scherfestigkeit von Schichten aus der betreffenden Haftklebemasse durch Bestimmung des maximalen Mikroscherweges unter einer Temperaturbelastung von 40 °C.
Angaben zum Mikroscherweg im Folgenden als Charakteristikum des Vernetzungszustandes der Haftklebemasse erfolgen in Bezug auf die Scherung in 15 min bei 40 °C eines anfänglich 13 mm x 10 mm großen Flächenstückes mit einer Dicke entsprechend einem Flächengewicht von 50 g/m², bei Belastung mit 1,0 N in Richtung der größeren Längenausdehnung, entsprechend der Methode wie im Abschnitt "Mikroscherweg-Messung / Vernetzungszustand" dieser Schrift beschrieben.

Die erfindungsgemäße Haftklebemasse ist für den Einsatz für die Verklebung von Druckklischees auf Druckzylindern und -hülsen, insbesondere als Klebemassenschicht eines Klebebandes auf der Seite, die dem Druckzylinder bzw. der -hülse zugewandt ist (also bei der Verklebung mit diesen Untergründen in Kontakt steht), insbesondere geeignet, wenn ihr Mikroscherweg in Betreff auf den oben angegebenen Bezug zwischen 100 µm und 300 µm liegt. Die besten Eigenschaften hat die erfindungsgemäße Klebemasse bei einem Vernetzungszustand, der einem Mikroscherweg in Betreff auf den oben angegebenen Bezug zwischen 125 µm und 250 µm entspricht.

Die vorgenannten Werte können gut eingestellt werden durch Einsatz eines geeigneten Vernetzers in einer wohldefinierten Menge, insbesondere bei einer nahezu vollständig ablaufenden Vernetzungsreaktion.

Durch Zugabe geeigneter thermischer Vernetzer ist die erfindungsgemäße Haftklebemasse vorteilhaft thermisch vernetzbar, somit kann auf den Zusatz von aktinisch aktivierbaren Vernetzern, wie beispielsweise durch ultraviolettes Licht aktivierbare Vernetzer (UV-Vernetzer), verzichtet werden. Die thermische Vernetzung kann unter für die Haftklebemasse wesentlich milderen Bedingungen durchgeführt werden, da die Einwirkung der auch zerstörend wirkenden Strahlen vermieden werden kann.
Sofern dies im Einzelfall gewünscht ist, ist es jedoch auch möglich, eine Vernetzung ausschließlich oder zusätzlich durch die Bestrahlung mit aktinischer Strahlung zu bewirken, wobei gegebenenfalls erforderliche oder fördernde Vernetzersubstanzen zugesetzt werden können (z.B. UV-Vernetzer).

In der Regel enthält die erfindungsgemäße Haftklebemasse somit thermische Vernetzer, also solche Substanzen, die unter dem Einfluss thermischer Energie eine Vernetzungsreaktion ermöglichen (initiieren) und/oder fördern.

Die Einstellung des Vernetzungszustandes - insbesondere auf die oben genannten bevorzugten Bereiche - kann beispielweise geschehen durch die Verwendung kovalent reagierender Vernetzer, insbesondere von Epoxiden, Isocyanaten und/oder Aziridinen, und/oder durch die Verwendung koordinativer Vernetzer, insbesondere von Metallchelaten, bevorzugt von Aluminiumchelat.

Metallchelate, wie insbesondere Aluminiumchelate, etwa in Form von Aluminium(III)-acetylacetonat, werden zur Erzielung des oben genannten Vernetzungszustandes bevorzugt in einer Menge von 0,15 bis 0,35 Gew.-Teilen, besonders bevorzugt von 0,2 bis 0,3 Gew.-Teilen, jeweils bezogen auf 100 Gew.-Teile der Polymerkomponente (lösemittelfrei) eingesetzt.

Weitere sehr geeignete thermische Vernetzer sind beispielweise Epoxide enthaltend tertiäre Aminfunktionen, wie insbesondere Tetraglycidyl meta-Xylendiamin (N,N,N',N'-Tetrakis(oxiranylmethyl)-1,3-benzendimethanamin). Diese Verbindungen werden bevorzugt in einer Menge von 0,03 bis 0,1 Gew.-Teile, besonders bevorzugt von 0,04 bis 0,07 Gew.-Teile, beispielweise 0,06 Gew.-Teile, wiederum jeweils bezogen auf 100 Gew.-Teile der Polymerkomponente (lösemittelfrei) eingesetzt, um den oben definierten Vernetzungszustand zu erzielen.

Vorteilhaft wird derart vernetzt, dass die Vernetzungsreaktion möglichst vollständig abläuft. Hierzu ist es günstig, wenn mindestens 85 Gew.-%, bevorzugt mindestens 90 Gew.-% des Vernetzers während der Vernetzungsreaktion umgesetzt werden. Bei einer entsprechenden Umsetzung der Vernetzungsreaktion konnten der oben definierte Vernetzungszustand der Haftklebemasse jeweils realisiert werden.

Die Herstellung einer vernetzten Haftklebemasse erfolgt dabei derart, dass zunächst durch radikalische Polymerisation aus einer Monomermischung umfassend die Monomere a) bis d) bzw. i.a) bis i.d) bzw. ii.a) bis ii.c) bzw. iii.a) bis iii.d) eine Polymerkomponente hergestellt wird, während oder bevorzugt nach der Polymerisation zumindest ein thermischer Vernetzer, insbesondere ein oder mehrere der oben aufgeführten Vernetzer, ganz besonders bevorzugt Aluminium(III)-acetylacetonat (im weiteren Text als Aluminiumchelat bezeichnet) und/oder Tetraglycidyl meta-Xylendiamin (im weiteren Text als Erisys GA 240 bezeichnet) zugesetzt wird, insbesondere in den oben angegebenen jeweiligen Mengen, der Polymerkomponente gegebenenfalls weitere Polymerkomponenten auf Basis einer Monomermischung umfassend die Monomere, ferner die erfindungsgemäßen Additive und/oder gegebenenfalls weitere (Standard-)Additive beigemischt werden, und die mit dem Vernetzer vermischte Haftklebemasse durch Zufuhr thermischer Energie so weitgehend vernetzt wird, dass ihr Vernetzungszustand einem Mikroscherweg im Bereich von 100 µm bis 300 µm, bevorzugt im Bereich von 125 µm bis 250 µm entspricht (Bezug siehe oben).

### Beimischungen

In bevorzugter Weise ist bereits die Polymerkomponente als solche - ohne wesentliche Anteile an weiteren Bestandteilen - haftklebrig. In einer vorteilhaften Ausgestaltung der Erfindung macht die Polymerkomponente bzw. machen die Polymerkomponenten basierend auf Monomermischungen umfassend die Monomere a) bis d) bzw. i.a) bis i.d) bzw. ii.a) bis ii.c) bzw. iii.a) bis iii.d) mindestens 90 Gew.-%, bevorzugt mindestens 95 Gew.-%, mehr bevorzugt mindestens 98 Gew.-%, besonders bevorzugt mehr als 99,9 Gew.-% der Haftklebemasse aus. Sehr bevorzugt wird ein Wert von 100 Gew.-%. Üblicherweise umfassen Haftklebemassen aber herstellungsbedingt einen geringen Anteil an Verunreinigungen, nicht umgesetzten Monomeren oder dergleichen.

Bei geeigneter Wahl der Monomere, wie sie mit den Monomeren a) bis d) bzw. i.a) bis i.d) bzw. ii.a) bis ii.c) bzw. iii.a) bis iii.d) und gegebenenfalls weiteren Comonomeren definiert sind, kann die erfindungsgemäße Haftklebemasse harzfrei und/oder - unbeschadet der Anwesenheit oder Abwesenheit von Vernetzern (siehe oben) - frei von anderen Standard (d.h. nicht erfindungsgemäßen) Additiven eingesetzt werden.

Zur Feinjustierung der Haftklebeeigenschaften oder als beitragende Komponenten zu einer Vernetzungs- oder Härtungsreaktion sind Haftklebemassen häufig Harze beigemischt (klebrigmachende Harze, Reaktivharze). Die erfindungsgemäße Haftklebemasse kann dementgegen hervorragend ohne die Beimischung von Harzen realisiert werden, ohne dass dies einen nachteiligen Einfluss auf ihre Eignung für den genannten Einsatzzweck hätte. Dabei kann sowohl auf klebrigmachende, auf thermoplastische als auch auf Reaktiv-Harze verzichtet werden. Insbesondere führt die Abwesenheit von Harzen zu einer besonders rückstandfreien Substratoberfläche nach der Demontage des Klebebandes, beispielweise zu besonders rückstandsfreien Druckzylindern beziehungsweise Druckhülsen, nachdem das zuvor verklebte erfindungsgemäße Haftklebeband wieder entfernt wurde.

Als Harze werden im Rahmen dieser Schrift insbesondere solche oligo- und (niedrig)polymeren Verbindungen angesehen, deren zahlenmittlere Molmasse Mₙ nicht mehr als 5.000 g/mol beträgt. Selbstredend werden kurzkettige Polymerisationsprodukte, die bei der Polymerisation der oben definierten Monomermischung zur Herstellung der Polymerkomponente der erfindungsgemäßen Haftklebemasse entstehen, nicht unter den Begriff "Harze" subsumiert.

Klebrigmachende Harze - auch als Klebharze bezeichnet - haben häufig Erweichungspunkte im Bereich von 80 bis 150 °C, ohne sich bei der Definition auf diese Spanne einschränken zu wollen. Die Angaben zum Erweichungspunkt T_{E} von oligomeren und polymeren Verbindungen, wie zum Beispiel der Harze, beziehen sich auf das Ring-Kugel-Verfahren gemäß DIN EN 1427:2007 bei entsprechender Anwendung der Bestimmungen (Untersuchung der Oligomer- bzw. Polymerprobe statt Bitumens bei ansonsten beibehaltener Verfahrensführung). Die Messungen erfolgen im Glycerolbad. Solche Harze, auf die bei der erfindungsgemäßen Haftklebemasse verzichtet werden kann, sind beispielsweise natürliche und/oder synthetische Harze, wie Pinen- und Indenharze, Kolophonium und Kolophoniumderivate (Kolophoniumester, auch durch z. B. Disproportionierung oder Hydrierung stabilisierte Kolophoniumderivate), Polyterpenharze, Terpenphenolharze, Alkylphenolharze, aliphatische, aromatische und aliphatisch-aromatische Kohlenwasserstoffharze, um nur einige zu nennen.

Als Reaktivharze werden solche Harze verstanden, die funktionelle Gruppen derart aufweisen, dass sie weiteren Bestandteilen der Haftklebemasse - wie beispielweise den Makromolekülen der Polymerkomponenten oder anderen Reaktivharzen - unter geeigneter Aktivierung reagieren könnten.

Zur Optimierung der erfindungsgemäßen Haftklebemasse können zudem die dem Fachmann für den jeweiligen Zweck jeweils geläufigen Standard-Additive zugesetzt werden. Ein Vorteil der erfindungsgemäßen Haftklebemasse ist es aber, insbesondere auch - abgesehen von den gesondert diskutierten Vernetzern - Standard-additivfrei hervorragend für den genannten Einsatzzweck geeignet zu sein. Auf die Anwesenheit von weiteren Standard-Additiven - unbeschadet der Anwesenheit oder Abwesenheit von Vernetzern - kann somit verzichtet werden, ohne dass dies nachteilige Auswirkungen auf die vorteilhaften Eigenschaften der Haftklebemasse hätte. So kann insbesondere auf die Beimischung von Standard-Additiven wie Weichmachern, Füllmaterialien, funktionellen Zusatzstoffen zur Erzielung bestimmter physikalischer Eigenschaften (wie elektrisch leitfähige Füllmaterialien, thermisch leitfähige Füllmaterialien und dergleichen), Flammschutzmitteln (wie beispielweise Ammoniumpolyphosphat und dessen Derivate) und dergleichen verzichtet werden.

### Verwendung

Die erfindungsgemäße Haftklebemasse ist geeignet zur sicheren Verklebung auf gängigen Materialien und zeichnet sich aus durch eine gute rückstandsfreie Wiederablösbarkeit. Dieses Verhalten zeigt sie insbesondere auch für sehr polare Untergründe, von denen Klebemassen gemäß des Standes der Technik, insbesondere nach längerer Verklebungsdauer, regelmäßig nicht ohne das Zurückbleiben von Rückständen wieder gelöst werden können.

Eine sehr gute Reversibilität, also rückstandsfreie Wiederablösbarkeit, konnte selbst für Untergründe festgestellt werden, deren Oberflächenenergie 45 mN/m oder mehr beträgt, insbesondere sogar für Materialien mit Oberflächenenergien im Bereich von 48 mN/m oder mehr, wie beispielweise Stahl, das nach Literaturangaben den Wert 50 mN/m aufweist.

Gegenstand der Erfindung sind weiterhin die Verwendung der erfindungsgemäßen Haftklebemasse als Klebemassenschicht für Haftklebebänder, insbesondere für doppelseitig klebende Haftklebebänder sowie die entsprechenden Haftklebebänder umfassend eine Schicht der erfindungsgemäßen Haftklebemasse. Solche Klebebänder können insbesondere mit einem Träger, ggf. weiteren Schichten und zwei außenliegenden Klebemassenschichten ausgerüstet sein, die wiederum temporär - zur besseren Handhabung, Lagerung und Anbietung - auf einer oder beiden Haftklebemassenschichten mit einem temporären Abdeckmaterial - auch als Liner bezeichnet - versehen sein können. Bei derartigen doppelseitig haftklebend ausgerüsteten Klebebändern können beide Klebemassenschichten aus der erfindungsgemäßen Haftklebemasse gebildet sein - und insbesondere in ihrer Zusammensetzung und/oder ihrer Dicke und/oder ihrem Vernetzungszustand identisch sein -, oder es kann eine der Klebemassenschichten durch eine erfindungsgemäße Haftklebemasse realisiert sein, während die andere Klebemassenschicht aus einer anderen Haftklebemasse gewählt wird, die optimal auf das entsprechend zu verklebende Substrat abgestimmt sein kann. Als Trägermaterialien für die Haftklebebänder eignen sich die dem Fachmann geläufigen und üblichen Folien, wie zum Beispiel Polyester, Polyethylenterephthalat (PET), Polyethylen (PE), Polypropylen (PP), biaxial orientiertes Polypropylen (BOPP), monoaxial orientiertes Polypropylen (MOPP), Polyurethan (PU), Polyvinylchlorid (PVC) und so weiter, wobei diese Materialien auch jeweils als geschäumte Schicht eingesetzt werden können.

Es sei darauf hingewiesen, dass die erfindungsgemäße Haftklebemasse auch als Klebemassenschicht anderer Klebebänder, beispielsweise einschichtiger, trägerloser Klebebänder ("Transferklebebänder"), die aus der Klebemassenschicht bestehen, einsetzbar ist.

Die erfindungsgemäße Haftklebemasse kann hervorragend zum Verkleben flexibler Druckplatten auf gekrümmten Oberflächen, insbesondere auf Druckplatten oder Klischees, eingesetzt werden, insbesondere als Klebemassenschicht eines Haftklebebandes. Die besondere Eignung der erfindungsgemäßen Haftklebemasse für die reversible Verklebung auf Kunststoff (siehe oben) macht diese für die Verklebung auf Druckplatten bzw. -klischees aus diesem Material besonders geeignet. Da die Klebemasse gute Eigenschaften auch auf anderen Materialien besitzt, können die entsprechenden Haftklebebänder sehr flexibel eingesetzt werden, auch bei der Verwendung im Flexodruck. So kann die erfindungsgemäße Haftklebemasse als Klebemassenschicht doppelseitiger Haftklebebänder zum Einsatz kommen, wobei die erfindungsgemäße Haftklebemasse die während der Verklebung zur Druckplatte bzw. zum Klischee gerichtete Klebemassenschicht darstellt. Insbesondere werden doppelseitige Haftklebebänder eingesetzt, wie sie vorstehend beschrieben sind. Als Trägermaterial wird dabei vorteilhaft ein geschäumtes Flächengebilde verwendet, zum Beispiel eine Polymerschaumschicht. So lassen sich insbesondere geschäumte Polyolefine - wie Polyethylen und Polypropylen - einsetzen, besonders bevorzugt ist ein Polyethylen/Ethylenvinylacetat-Schaum. Weiterhin können beispielhaft geschäumte Polyurethane oder geschäumte Polyvinylchloride eingesetzt werden. Generell kann durch eine Aufrauhung des Trägermaterials eine Verbesserung der Haftklebemassenverankerung vorgenommen werden. Ein Weg zur Aufrauhung und zur chemischen Modifizierung der Polymerstruktur verläuft über die nasschemische Ätzung des Trägermaterials. Neben der Ätzung kann auch auf andere Weise vorbehandelt werden. So lassen sich zur Verbesserung der Verankerung die Trägermaterialien physikalisch und chemisch vorbehandeln. Zur physikalischen Behandlung wird die Folie bevorzugt mit Flamme oder Corona oder Plasma behandelt. Für die chemische Vorbehandlung wird das Trägermaterial mit Vorstrich versehen, wobei in einer besonders bevorzugten Auslegung Reaktiv-Vorstriche verwendet werden. Als Vorstrichmaterialien eignen sich z.B. Reaktivprimer.

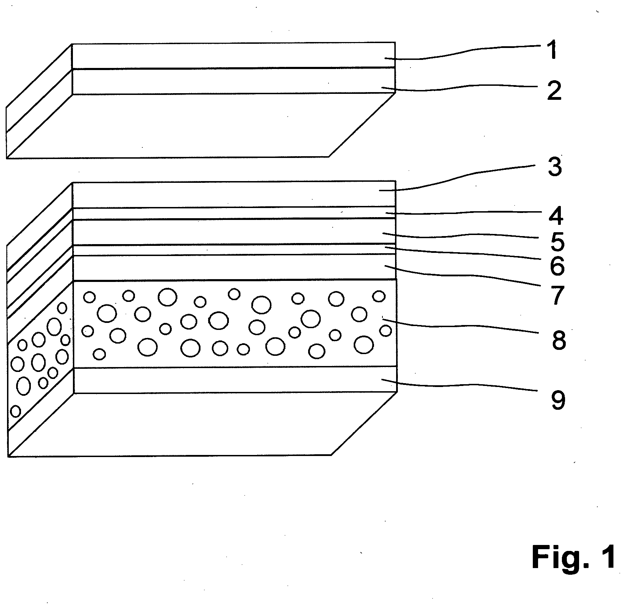

Der Aufbau eines solchen erfindungsgemäßen Klebebandes entspricht dabei in einer sehr bevorzugten Ausgestaltung einer Schichtenfolge, wie sie in Fig. 1 wiedergegeben ist. Dabei wird die erfindungsgemäße Haftklebemasse besonders bevorzugt im Sinne der Klebemassenschicht 9, also der bei der Anwendung zum Druckzylinder oder zur Druckhülse gewandten Klebemassenschicht, eingesetzt, da sie für diesen Einsatzzweck optimiert ist.

Aufgrund des großen Einsatzspektrums der erfindungsgemäßen Haftklebemasse ist diese auch für die Klebeschicht geeignet, die mit dem Druckklischee in Kontakt steht.

Das erfindungsgemäße Klebeband dient vorteilhaft zum Verkleben eines Klischees, das sich aus einer PET-Folie 2 und einer Schicht eines Fotopolymers 1 zusammensetzt. Die Schichten 3 bis 9 bilden ein doppelseitig klebend ausgerüstetes - erfindungsgemäßes - Klischeeklebeband, das dank seines geschäumten Trägers 8 kompressibel und elastisch ist.
Beginnend von der Seite, mittels derer das Klischee verklebt wird, besteht das Klebeband aus folgenden einzelnen Abschnitten:
- 3: Haftklebemasse zur Montage des Klischees
- 4: Die aufgeraute obere Oberfläche der PET-Folie 5
- 5: Folie aus Polyethylenterephthalat (PET)
- 6: Die aufgeraute untere Oberfläche der PET-Folie 5
- 7: Haftklebemasse zur Verankerung des geschäumten Trägers 8 auf der PET-Folie 5
- 8: geschäumter Träger
- 9: Haftklebemasse zur Montage auf dem Druckzylinder

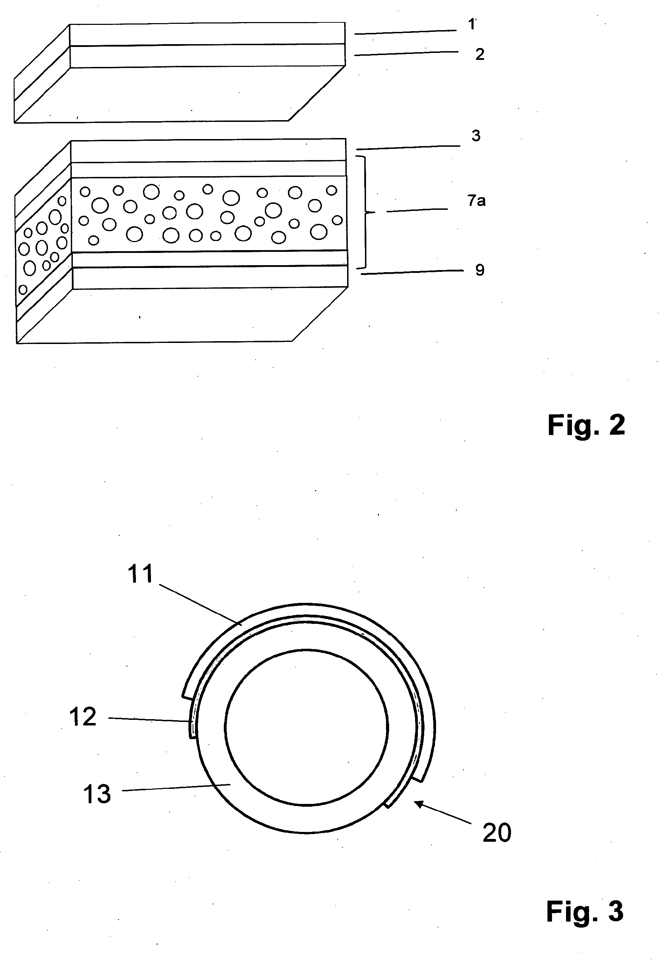

Ein alternativer Klebebandaufbau ist in Fig. 2 gezeigt. Dort besteht das Klebeband aus den folgenden Abschnitten:
- 3: Haftklebemasse zur Montage des Klischees
- 7a: Verbund aus geschäumten Träger und beidseits auf die Oberfläche aufgeschmolzener PE-Folie
- 9: Haftklebemasse zur Montage auf dem Druckzylinder

Gerade in der Druckindustrie ist es von Bedeutung, dass die hier eingesetzten Klebebänder eine hohe Flexibilität aufweisen, also in gewissem Maße bei Druckanwendung ihre Dicke verändern können beziehungsweise nach Wegnahme der Belastung wieder ihre ursprüngliche Form annehmen können.

Aus diesem Grunde ist in einer weiteren vorteilhaften Ausführungsform des beidseitig klebend ausgerüsteten Klebebands zwischen der Folie aus Polyethylenterephthalat (PET) und zumindest einer Klebemasse ein geschäumter Träger vorhanden, insbesondere zwischen der dem Druckzylinder oder dem Sleeve zugewandten Klebemasse und der Folie aus Polyethylenterephthalat (PET), sofern das Klebeband in der Druckindustrie Verwendung findet.

Vorteilhaft ist darüber hinaus, wenn der geschäumte Träger 8 aus Polyolefin(en), Polyvinylchlorid oder Polyurethan besteht. In einer besonders bevorzugten Auslegung werden geschäumte Polyethylene und/oder Polypropylene eingesetzt. Weiter bevorzugt ist, wenn die Oberflächen des geschäumten Trägers 8 physikalisch vorbehandelt sind, wobei die physikalische Methode zur Vorbehandlung insbesondere gewählt wird aus der Gruppe Coronavorbehandlung, Flammvorbehandlung oder Plasmabehandlung.

Die üblicherweise als "Coronavorbehandlung" bezeichnete physikalische Vorbehandlungstechnik ist meist eine "dielektrische Barrierenentladung" (engl. *dielectric barrier discharge,* DBD), bei der mittels hochfrequenter Wechselspannung Hochspannungsentladungen erzeugt werden. Dabei wird das zu behandelnde Substrat bahnförmig zwischen zwei Hochspannungselektroden durchgeführt, wobei mindestens eine Elektrode aus einem dielektrischen Material besteht oder damit beschichtet ist. Das zu behandelnde Material wird dabei direkt den elektrischen Entladungen ausgesetzt oder zumindest dem durch die Entladungen erzeugten reaktiven Gas. Die elektrischen Entladungen werden oft als "Coronaentladungen" bezeichnet.

Die Coronavorbehandlung als Methode zur Oberflächenvorbehandlung von Trägern wird vielfach industriell eingesetzt. Als Prozessgas dient üblicherweise die Umgebungsluft. Die Verwendung anderer Prozessgase als Luft wie zum Beispiel Stickstoff, Kohlendioxid oder Edelgase ist ebenfalls als Stand der Technik bekannt.

Alternativ kann die dem Träger zugewandte Oberfläche der Haftklebemassenschicht 9 physikalisch vorbehandelt werden, insbesondere durch Coronavorbehandlung, Flammvorbehandlung oder Plasmabehandlung, um die Verbundfestigkeit zwischen der Haftklebemassenschicht und dem Träger zu verbessern. Die physikalische Behandlung der Haftklebemasse kann ebenfalls vorteilhaft in Luft als Prozessgas durchgeführt werden, es können aber als Prozessgase zum Beispiel Stickstoff, Kohlendioxid oder Edelgase verwendet werden. Als vorteilhaft haben sich zum Beispiel Stickstoff oder ein Gemisch aus Luft und Stickstoff herausgestellt.

Zur Erhöhung der Klebkraft zwischen der Haftklebemassenschicht 9 und dem geschäumten Träger 8 hat es sich überraschend als besonders vorteilhaft herausgestellt, wenn sowohl die Haftklebemassenschicht 9 als auch der geschäumte Träger 8 auf ihren sich im Verbund jeweils zugewandten Seiten vor der Zusammenbringung physikalisch vorbehandelt werden, insbesondere durch eine der vorgenannten physikalischen Methoden. Dabei können die Vorbehandlungsmethoden der beiden Schichten unabhängig voneinander gewählt werden, vorzugsweise werden sie durch die gleiche Methode vorbehandelt, besonders vorzugsweise mittels Coronavorbehandlung. Durch eine Vorbehandlung beider Schichten, insbesondere mittels Coronavorbehandlung, wird die innere Festigkeit der Verbindung signifikant verbessert, und die bei Verwendung der erfindungsgemäßen Haftklebemasse bereits geringe Menge eventuell verbleibender Rückstände des Klebebandes bei der Demontage von seinem Untergrund (wie etwa einem Druckzylinder oder einer Druckhülse) kann noch einmal erkennbar verringert werden.

Grundsätzlich ist es nun für den Fachmann überraschend, dass durch die Behandlung einer Klebemassenoberfläche mit einer physikalischen Methode eine Steigerung der Klebkraft erreicht werden kann. Da der Fachmann erwartet, dass alle diese Methoden mit Kettenbrüchen und einem Materialabbau einhergehen, würde die Bildung einer Schicht mit hohem Gehalt an polaren Gruppen, aber geringem innerem Zusammenhalt erwartet. Durch die schwach kohäsive Schicht mit erhöhter Polarität ist eine bessere Benetzung des Substrats durch die Klebemasse nicht überraschend, es werden jedoch reduzierte Adhäsionseigenschaften erwartet.

Die Behandlungsintensität einer Coronavorbehandlung wird als "Dosis" in [W*min/m²] angegeben, mit der Dosis D=P/(b*v), mit P=elektrischer Leistung [W], b=Elektrodenbreite [m], und v=Bahngeschwindigkeit [m/min].

Die Coronavorbehandlung erfolgt bevorzugt bei einer Dosis von 1 bis 150 W*min/m². Besonders bevorzugt sind für die Haftklebemassenschicht eine Dosis von 10 bis 100 W*min/m², insbesondere eine Dosis von 40 bis 60 W*min/m². Für die Schaumträgerschicht werden bevorzugt höhere Dosen verwendet, so sind hier eine Dosis von 50 bis 150 W*min/m² und dabei insbesondere eine Dosis von 80 bis 120 W*min/m² sehr vorteilhaft.

Vorzugsweise hat die Folie aus Polyethylenterephthalat (PET) eine Dicke von 5 µm bis 500 µm, bevorzugt 5 µm bis 60 µm, ganz besonders bevorzugt sind 12 µm und 23 µm.

Neben dem in Figur 1 dargestellten Produktaufbau kann die Stabilisierungsfolie auch aus Polyolefinen, Polyurethanen oder Polyvinylchlorid bestehen und neben der Ätzung auch auf verschiedene Weise vorbehandelt sein. So lassen sich auch hier zur Verbesserung der Verankerung die Stabilisierungsfolien physikalisch und chemisch vorbehandeln. Zur physikalischen Behandlung wird die Folie bevorzugt mit Flamme oder Corona oder Plasma behandelt. Für die chemische Vorbehandlung wird die Folie mit Vorstrich versehen, wobei in einer besonders bevorzugten Ausführungsform Reaktiv-Vorstriche verwendet werden. Als Vorstrichmaterialien eignen sich beispielweise Reaktivprimer. Weiterhin können auch hier - alternativ oder zusätzlich zu der Folienschicht - die angrenzenden Klebemassenschichten vorbehandelt sein, insbesondere entsprechend der oben beschriebenen Klebemassenschicht 9.

In einer weiteren bevorzugten Auslegung wird die Stabilisierungsfolie aus Polyethylenterephthalat oder einem anderen Material ein- oder beidseitig bedruckt. Diese Bedruckung kann unter einer später aufzubringenden Haftklebemasse liegen.

Für die Haftklebemassen 7 kann beispielweise ebenfalls eine Acrylathaftklebemasse eingesetzt werden, aber es sind grundsätzlich auch andere Klebemassentypen verwendbar.

Weiterhin kann das erfindungsgemäße Klebeband ein- oder beidseitig mit einer Abdeckung aus Papier oder aus einer entsprechenden Folie, insbesondere einer beidseitig silikonisierten, versehen sein, um ein längeres Lagern und eine bequeme Handhabung während des Gebrauchs zu gewährleisten.

Aber auch die sonstigen Klebebanddesigns, wie sie aus dem Stand der Technik insbesondere für die Verklebung von Druckklischees oder Druckplatten auf Druckzylindern oder -hülsen bekannt sind, können erfindungsgemäß realisiert sein, wobei durch die erfindungsgemäße Haftklebemasse insbesondere zumindest die Klebemasseschicht zur Verklebung auf dem Zylinder bzw. auf der Hülse realisiert ist.

Aufgrund seiner speziellen Eigenschaften lässt sich das erfindungsgemäße beidseitig klebend ausgerüstete Klebeband hervorragend zur Fixierung von Druckplatten, insbesondere von - insbesondere mehrschichtigen - Photopolymer-Druckplatten (Klischees) auf Druckzylindern und auf Druckhülsen (Sleeves) einsetzen.

Das erfindungsgemäße Klebeband ist aufgrund seiner besonderen Ausführung besonders mit den auf die Druckplatte abgestimmten Klebkräften hervorragend geeignet, die Druckplatten auf den Druckzylindern zu verkleben. Einerseits ist es möglich, die Druckplatten vor Druckbeginn zu repositionieren, andererseits aber ist eine feste Verklebung der Platte während des Druckvorganges gewährleistet. Auch eine durch Farbreste verunreinigte Druckplatte lässt sich vom Haftklebeband ohne irgendeine Beschädigung entfernen. Ein Abschälen der Trägerschicht der Platte oder die Bildung von unerwünschten Falten in der Platte während des Entfernens treten nicht auf. Auch nach dem Entfernen des Klebebands von dem Druckzylinder verbleiben keine Rückstände.

Druckklischees werden auf Druckzylindern und auf Druckhülsen auf unterschiedliche Arten und Weisen verklebt. Eine gängige Methode zeigt die Figur 3:
Gemäß Figur 3 ist das Klischee (11) mittels eines Klebebandes (12) auf der Druckhülse (13) oder dem Druckzylinder (13) verklebt, wobei das Klebeband (12) größer als das Klischee (11) ist und daher mit freiliegenden Bereichen (20) unter dem Klischee (11) herausragt.

Die erfindungsgemäßen Klebebänder zeigen ein sehr gutes Montageverhalten. Als Montageverhalten wird im Sinne dieser Schrift insbesondere die Soforthaftung bei dem Verkleben eines Klebebandes mittels der betreffenden Haftklebeschicht auf einem Untergrund verstanden, für ein gutes Montageverhalten soll ein kurzzeitiges Andrücken mit geringer Kraft also demgemäß zu einer guten und verlässlichen Haftung führen.

Die erfindungsgemäßen Haftklebemassen erfüllen die Anforderungen nach einfacher Montage, Repositionierbarkeit, sicherem Halt insbesondere auch auf polaren Untergründen und unter Lösungsmitteleinfluss. Weiterhin zeichnen sie sich durch eine einfache und rückstandsfreie Demontierbarkeit aus. Sie sind insbesondere für die Anwendung im Flexodruck, wie vorstehend dargestellt, geeignet.

### Experimente

Die untersuchten Haftklebemassen (erfindungsgemäße Beispiele und Referenzbeispiele) wurden wie folgt hergestellt, sofern nicht anders angegeben:

### Acrylathaftklebemassen

Ein für radikalische Polymerisationen konventioneller 2 L-Glasreaktor wurde mit 400 g der Monomermischung entsprechend der Zusammensetzung, wie sie für die einzelnen Beispiele in Tabelle 1 dargestellt ist, 150 g Aceton und 150 g Siedegrenzbenzin 60/95 befüllt und gut vermischt. Nach 45minütigem Durchleiten von Stickstoffgas unter Rühren wurde der Reaktor mittels eines äußeren Heizbades auf 58 °C (Innentemperatur) hochgeheizt und es wurden 0,16 g 2,2'-Azodi(2-methylbutyronitril) (Vazo 67) gelöst in 10 g Aceton hinzugegeben. Anschließend wurde das äußere Heizbad auf 75 °C erwärmt und die Reaktion konstant unter Siedekühlung (Außentemperatur 75 °C) durchgeführt. Nach 1 Stunde Reaktionszeit wurden weitere 0,24 g 2,2'Azodi(2-methylbutyronitril) gelöst in 10 g Aceton hinzugegeben. Nach 3 Stunden Gesamtreaktionszeit wurde mit 45 g Aceton und 45 g Siedegrenzbenzin 60/95 verdünnt. Nach 5 Stunden und 30 Minuten Gesamtreaktionszeit wurden 0,60 g Bis-(4-tert-Butylcyclohexanyl)-Peroxydicarbonat gelöst in 10 g Aceton hinzugegeben. Nach 7 Stunden Gesamtreaktionszeit wurden weitere 0,60 g Bis-(4-tert-Butylcyclohexanyl)-Peroxydicarbonat gelöst in 10 g Aceton hinzugegeben. Nach 10 Stunden Gesamtreaktionszeit wurde mit 45 g Aceton und 45 g Siedegrenzbenzin 60/95 verdünnt. Die Reaktion wurde nach 24 Stunden Gesamtreaktionszeit abgebrochen und auf Raumtemperatur abgekühlt.

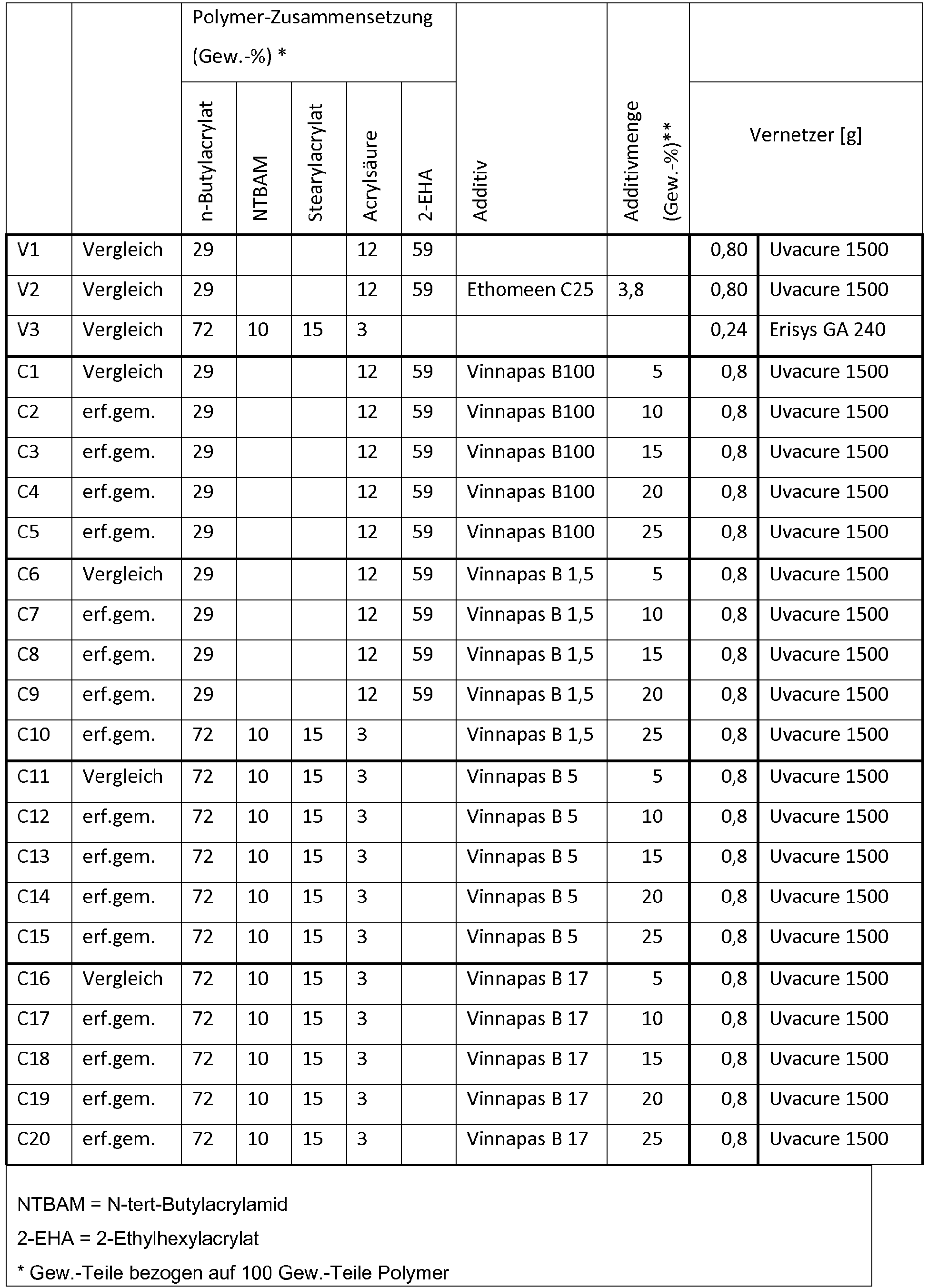

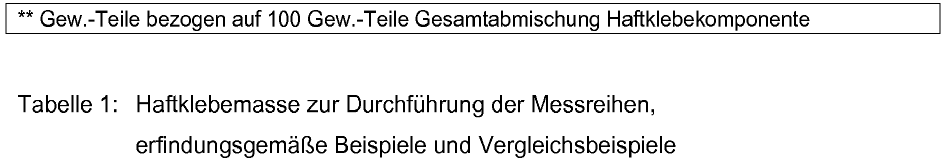

Hinter den kommerziellen Additivbezeichnungen verbergen sich folgende

**Verbindungen:**

| | |
|---|---|
| Vinnapas B 100 (WACKER): | Polyvinylacetat Mw 90.000 g/mol |
| Vinnapas B 1,5 (WACKER): | Polyvinylacetat Mw 15.000 g/mol |
| Vinnapas B 5 (WACKER): | Polyvinylacetat Mw 25.000 g/mol |
| Vinnapas B 17 (WACKER): | Polyvinylacetat Mw 45.000 g/mol |

Anschließend wurde das Polymerisat mit dem Additiv (Menge wie für die einzelnen Beispiele in Tabelle 1 angegeben) abgemischt und mit einer 1:1 Mischung aus Aceton und Siedegrenzenbenzin 60/95 auf einen Feststoffgehalt von 30 % verdünnt, und mit einem Epoxid, und zwar entweder N,N,N',N'-Tetrakis(2,3-epoxypropyl)-m-xylol-α,α'-diamin, auch Erisys GA240, oder (3',4'-Epoxycyclohexane)methyl-3,4-Epoxycyclohexyl-carboxylat, auch Uvacure 1500, und zwar entsprechend der Zusammensetzung, wie sie für die einzelnen Beispiele in Tabelle 1 wiedergegeben ist, vernetzt. Die Eigenschaften der so erhaltenen Haftklebemasse wurden anhand eines doppelseitigen Haftklebeverbundes bewertet.

Für die Untersuchungen wurde dabei die so erhaltene Polymerlösung auf eine genarbte/ strukturierte, silikonisierte Polyethylenfolie beschichtet. Nach Trocknung für 20 min bei 80 °C und siebentägiger Konditionierung bei 23 °C und 50 ± 5 % relativer Luftfeuchtigkeit betrug der Masseauftrag 35 g/m² (Klebeband b).

### Herstellung eines Haftklebeverbundes V

Zunächst erfolgte die Beschichtung der Haftklebemasse aus den Beispielen aus Lösung auf dem tesa üblichen beidseits silikonisierten, genarbten/ strukturierten Abdeckmaterial, um den bestmöglichen Übertrag der Linerstruktur in die Acrylathaftklebemasse zu erzielen. Nach einer Trocknung für 20 Minuten bei 80°C betrug das Masseausftragsgewicht 35 g/m².
Masseseitig wurde das beschichtete Linermaterial mit einer mittels Trichloressigsäure beidseitig geätzten 23 µm dicken PET-Folie kaschiert. Anschließend wurde über einen Transferträger eine handelsübliche Acrylatmasse mit einem Masseauftrag von 20 g/m² auf die unbeschichtete Seite der geätzten PET-Folie des Verbundes laminiert und ein PE-EVA-Schaum mit einer Dicke von 500 µm und einem Raumgewicht von 270 Kg/m³ zukaschiert.
Auf diesen Schaumträger wurde dann über einen Transferträger eine handelsübliche Acrylathaftklebemasse mit einem Masseauftrag von 40 g/m² auf die unbeschichtete Seite des vorherigen Verbundes auflaminiert (offenliegende Acrylathaftklebeschicht).

Das so hergestellte mehrschichtige Klebeband wird als Haftklebeverbund V bezeichnet.

### Beurteilungen der Anwendungseignung

Die Bewertungsmaßstäbe der folgenden Testmethoden wurden jeweils so gewählt, dass ein "o" ein für die Verwendung im Flexodruck als befriedigend zu beurteilendes Ergebnis darstellt, während "-"-Werte (und insbesondere "--"-Werte) erfahrungsgemäß zu erheblichen Problemen im Betrieb führen, die nicht mehr tolerierbar sind.

"+"-und "++"-Werte charakterisieren Muster von Klebebändern, die im Betrieb kaum bzw. so gut wie keine Probleme in Bezug auf die getestete Eigenschaft hervorrufen.

### Beurteilung Standard Klischeeverklebung (Test 1)

Aus dem zu untersuchenden doppelseitigen Haftklebeverbund wurden 250 mm x 160 mm große Muster geschnitten. Diese Muster wurden mit der handelsüblichen, offen liegenden Acrylathaftklebeschicht auf einen Stahlzylinder mit einem Durchmesser von 110 mm so geklebt, dass die kürzeren Kanten der Muster in Längsrichtung des Zylinders ausgerichtet waren. Dann wurde das Abdeckmaterial abgezogen, so dass die Schicht der erfindungsgemäßen Haftklebemasse nun offen lag. Auf die so verklebten Haftklebeverbund-Muster wurde eine vollflächig belichtete Druckplatte der Fa. DuPont Cyrel HOS mit den Abmessungen Länge 210 mm x Breite 120 mm x Dicke 1,7 mm derart auf die erfindungsgemäße Haftklebemasse verklebt, dass an jeder Kante 20 mm des darunter liegenden Haftklebeverbundes überstand (zentrierte Aufbringung auf dem Haftklebeverbund-Muster).

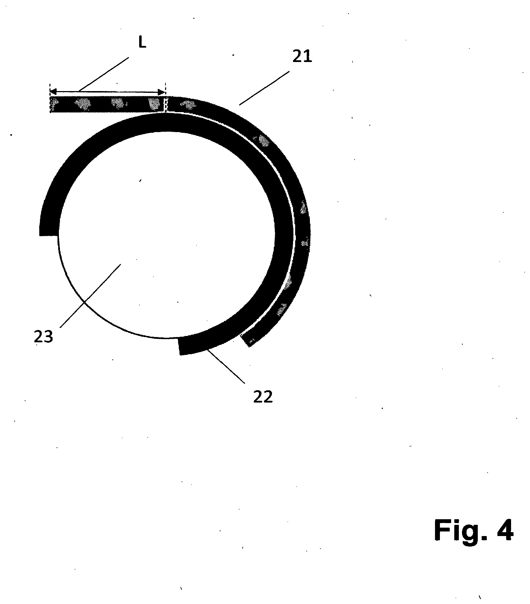

Die Aufbringung des Klischees geschah, indem eine der kürzeren Kanten des Klischees (Querkante) in einem Abstand von 20 mm zu einer der kürzeren Kanten des Haftklebeverbund-Musters parallel zu dieser Kante auf das Muster aufgebracht wurde. Dann wurde das Klischee von dieser Kante ausgehend mit einer Kunststoffrolle (Breite 100 mm, Durchmesser 30 mm, Shore-Härte A 45) angerollt. Die Anrollbewegung fand in Längsrichtung des Druckzylinders und lotrecht statt und wurde kontinuierlich von jeweils einer Längskante des Klischees zur gegenüberliegenden Längskante des Klischees und wieder zurück ausgeführt. Die Anrollgeschwindigkeit betrug dabei in Querrichtung 10 m/min. Der Druckzylinder rotierte gleichzeitig mit einer Oberflächengeschwindigkeit von 0,6 m/min, so dass mit der Kunststoffrolle relativ zum Druckklischee eine Zick-Zack Bewegung in Richtung auf die zweite Querkante des Klischees beschrieben wurde. Die Montage der Druckplatte auf dem Haftklebeverbund erfolgte mit der entsprechenden Anpresskraft, die erforderlich war, um das Klischee vollflächig und ohne Kantenabheben zu fixieren. Das Ganze wurde zweimal wiederholt. Der Druckzylinder wurde so ausgerichtet, dass sich beide kurzen Kanten des verklebten Klischees auf einer Höhe oberhalb der Drehachse des Zylinders befanden (offenliegender Bereich nach oben ausgerichtet). Anschließend wurden die auf dem Druckzylinder verklebten Muster für 3 Tage (72 Stunden) bei verschiedenen klimatischen Bedingungen gelagert.
Aufgrund des Rückstellverhaltens des Klischees neigt dieses zum Kantenabheben. Die erfindungsgemäße Acrylathaftklebemasse auf der Seite des Klischees (siehe erfindungsgemäße Beispiele in Tabelle 1 und 3) ist dabei so gewählt, dass ein Kantenabheben des Klischees vom Haftklebeverbund nicht erfolgt. Je nach Beständigkeit der Verklebung der erfindungsgemäßen Haftklebemasse auf der Druckplatte zeigt sich dabei ein Ablösen der Klischeekanten (vgl. Fig. 4; hier vereinfachend nur für eine Kante dargestellt; 21 = Klischee; 22 = Haftklebeverbund; 23 = Zylinder). Zur Beurteilung dieses Verhaltens wird die Länge L der abgehobenen Klischeekante bis zur ersten verbliebenen Kontaktstelle mit dem Untergrund bestimmt (Mittelwert jeweils aus der Auswertung beider Kanten und drei Messdurchgängen).

Der Test wurde zum einen mit frischen Klebebandmustern (1 Woche alt), zum anderen mit Klebebandmustern nach einer Zeit von 4 Wochen Lagerung bei 40 °C durchgeführt, und zwar jeweils unter zwei verschiedenen Bedingungen, nämlich zum einen bei Raumtemperatur (23 °C und 50 % relative Luftfeuchtigkeit), zum anderen bei 35 °C und einer relativen Luftfeuchtigkeit von 85 ± 5 %.

**Bewertungsschema Kantenabheben:**

| Länge Kantenabheben [mm] | Bewertung |
|---|---|
| ≤ 2 mm | ++ |
| ≤ 5 mm | + |
| ≤ 8 mm | 0 |
| ≤ 11 mm | - |
| > 11 mm | -- |

Weiterhin wird festgestellt, ob der Haftklebeverbund zuverlässig, ohne Blasenbildung und/oder ohne Wellenbildung auf dem jeweiligen Untergrund haften bleibt, wenn das Druckklischee vom Haftklebeverbund wieder abgezogen wird. Beide Anforderungen werden regelmäßig von den Abnehmern in der Druckindustrie gefordert, da diese einerseits eine sichere Fixierung des Klischees auf Hülse bzw. Zylinder erwarten, andererseits das Klischee zur passgenauen Fixierung aber häufig noch justieren müssen, wobei das zur Verklebung verwendete Klebeband nicht beschädigt werden soll und sich nicht ablösen darf.

### Beurteilung Ink Resistance - Cellulosenitrat-Anwendungstest (Test 2)

Zur Beurteilung der Widerstandsfähigkeit der Klebemasse gegen Einflüsse der Bindemittel in Druckfarben wurde eine 0,1 %ige Lösung von Cellulosenitrat in Ethanol hergestellt. Für den Test wurde die niedrigviskose "Walsroder® Nitrocellulose" A400 verwendet, die einen Stickstoffgehalt von 10,7 % - 11,3 % und einen Substitutionsgrad von 1,89 - 2,05 aufweist. Ein Muster-Klischee wird mit Ethanol vorgereinigt und zum Abdampfen eine halbe Stunde liegen gelassen. Mittels Zellstoff wird die Cellulosnitrat-Lösung mit einer Wischbewegung auf das Klischee aufgetragen. Die präparierte 1,14 mm dicke Platte muss mindestens 5 Minuten abdampfen, damit das für die Lösung verwendete Ethanol komplett verflogen ist. Wird die Platte früher verklebt, funktioniert der Test nicht, da das Rest-Ethanol an der Verklebungsfläche dafür sorgt, dass das Cellulosenitrat in die Masse hineingelöst wird und damit keine Wechselwirkung mehr zustande kommt. Die nach der Standardklischeeverklebung applizierte Platte wird für drei Tage bei 40°C gelagert. Die für die Demontage benötigte Kraft wird beurteilt. Beurteilt wurde dabei jeweils die subjektive aufzuwendende Kraft. Das nachfolgende Bewertungsschema wurde derart erstellt, dass ein mit "o" gekennzeichneter Kraftaufwand von Fachleuten als akzeptabel für die Anwendung angesehen wurde. Negative Bewertungen ("-") wurden als für die tägliche Anwendung nicht mehr akzeptabel erachtet.

**Bewertungsschema**

| | |
|---|---|
| wenig Kraftaufwand | + |
| mäßiger Kraftaufwand | ○ |
| hoher Kraftaufwand | - |

### Lösungsmittelbeständigkeit (Test 3)

Die Montage der Prüfmuster erfolgte wie in Test 1 (Beurteilung Kantenabheben).. Der Druckzylinder wurde so ausgerichtet, dass sich beide kurzen Kanten des verklebten Klischees auf einer Höhe oberhalb der Drehachse des Zylinders befanden (offenliegender Bereich des Zylinders nach oben ausgerichtet).

Mit einer Pipette wurde ein Lösungsmittelgemisch (1/8 Ethylacetat / 1/8 n-Propanol / 6/8 Ethanol) 1 min lang auf beide Kanten appliziert, so dass die Kanten ständig unter Lösungsmitteleinfluss standen. Dabei wurde gerade so viel Lösungsmittel appliziert, dass beide Kanten dauerhaft mit Lösungsmittel benetzt waren (Testbedingungen: 25 °C, 50 ± 5 % relative Luftfeuchtigkeit).
Der Zylinder wurde nach Ablauf der Benetzungsdauer auf eine seiner Kanten gestellt, so dass überschüssiges Lösungsmittel ablaufen konnte.

Es wurde beobachtet, ob sich die kurzen Kanten des Klischees von dem Haftklebeverbund abgehoben hatten. Ein Maß für das Kantenabheben war dabei die 60 min nach Ablauf der Benetzungsdauer in Tangentialrichtung gemessene Länge L des nicht mehr verklebten Stücks der Druckplatte (des abgehobenen Druckplattenstücks), gemessen von dem freiliegenden Ende bis zu der ersten noch verklebten Stelle (vgl. Fig. 1: 1 = Druckplatte (Klischee), 2 = Haftklebeverbund, 3 = Druckzylinder, L = Länge des abgehobenen Druckplattenstücks).

**Bewertungsschema:**

| Kantenabheben nach Lösungsmitteleinfluss | Bewertung |
|---|---|
| < 5 mm | ++ |
| 5 bis < 10 mm | + |
| 10 bis < 15 mm | 0 / + |
| 15 bis < 20 mm | 0 |
| 20 bis < 25 mm | 0 / - |
| 25 bis < 30 mm | - |
| 30 mm und mehr | -- |

Die Ergebnisse der Tests sind in der folgenden Tabelle 2 dargestellt, wobei die Polymerzusammensetzung der mit dem Buchstaben "B" beginnenden Beispiele 72 Gew.-% n-Butylamid, 10 Gew.-% N-tert-Butylacrylamid, 15 Gew.-% Stearylacrylat und 3 Gew.-% Acrylsäure und die Polymerzusammensetzung der mit dem Buchstaben "C" beginnenden Beispiele 59 Gew.-% Ethylhexylacrylat, 29 Gew.-% n-Butylacrylat und 12 Gew.-% Acrylsäure enthält..

**Tabelle 2: Ergebnisse der Beurteilung der Anwendungseignung (Ink Resistance, Montage und Solvent Resistance)**

| | **Ink-resistance** | **Kantenabheben 1,7 mm Platte*** | | | | **Solventresistance*** |
|---|---|---|---|---|---|---|
| | | Frisch | | 4Wo 40°C | | |
| | | RT | 35°C/85% | RT | 35°C/85% | |
| | | | | | | |
| V1 | **-** | ++ | + | ++ | ++ | + |
| V2 | **-** | ++ | + | ++ | + | ○ |
| V3 | **-** | ++ | ++ | ++ | ++ | -- |
| C1 | **-** | ++ | ++ | ++ | ++ | + |
| C2 | **+** | ++ | ++ | ++ | ++ | ++ |
| C3 | **++** | ++ | ++ | ++ | + | ++ |
| C4 | **++** | + | + | + | ○ | ++ |
| C5 | **+** | ○ | ○ | ○ | - | ○ |
| C6 | **-** | ++ | ++ | ++ | ++ | + |
| C7 | **++** | ++ | ++ | ++ | ++ | ++ |
| C8 | **++** | ++ | ++ | ++ | ++ | ++ |
| C9 | **++** | + | + | + | + | ++ |
| C10 | **++** | ○ | ○ | ○ | ○ | ○ |
| C11 | **-** | ++ | ++ | ++ | ++ | + |
| C12 | **++** | ++ | ++ | ++ | ++ | ++ |
| C13 | **++** | ++ | ++ | ++ | ++ | ++ |
| C14 | **++** | + | + | + | + | ++ |
| C15 | **+** | ○ | ○ | ○ | ○ | ○ |
| C16 | **-** | ++ | ++ | ++ | ++ | + |
| C17 | **+** | ++ | ++ | ++ | ++ | ++ |
| C18 | **+** | ++ | ++ | ++ | + | ++ |
| C19 | **+** | + | + | + | ○ | ++ |
| C20 | **+** | ○ | ○ | ○ | - | ○ |

## Patentansprüche

1. Verwendung einer Haftklebemasse, umfassend zumindest eine Haftklebekomponente, umfassend zumindest eine Polymerkomponente auf Basis einer Monomermischung enthaltend mindestens eines der folgenden Monomere:
- mindestens einen Acrylsäureester
- mindestens einen Methacrylsäureester
- Acrylsäure
- Methacrylsäure
für die Verklebung von Druckplatten, insbesondere auf Druckzylindern und/oder Druckhülsen,
**dadurch gekennzeichnet, dass** die Haftklebemasse des Weiteren 7 bis 30 Gew.-%, vorzugsweise7 bis 25 Gew.-%, besonders bevorzugt 7 bis 20 Gew.-% und insbesondere 10 bis 15 Gew.-%, jeweils bezogen auf die Gesamtabmischung der zumindest einen Haftklebekomponente ohne Lösungsmittel, eines Polyvinylacetats enthält, welches eine Molmasse M_{w} von 10.000 bis 100.000 g/mol aufweist, bestimmt mittels Gelpermeationschromatographie, unter Verwendung einer 100 µl klarfiltrierter Probe bei einer Probenkonzentration von 4 g/l, Tetrahydrofuran mit 0,1 Vol.-% Trifluoressigsäure als Eluent bei 25 °C, wobei als Vorsäule eine Säule Typ PSS-SDV, 5 µ, 10³ Å, ID 8,0 mm x 50 mm verwendet wird und zur Auftrennung die Säulen des Typs PSS-SDV, 5 µ, 10³ Å sowie 10⁵ Å und 10⁶ Å mit jeweils ID 8,0 mm x 300 mm eingesetzt werden, die Durchflussmenge 1,0 ml pro Minute beträgt und die Kalibrierung bezogen auf Polymethylmethacrylat-Standards erfolgt.

2. Verwendung nach Anspruch 1, **dadurch gekennzeichnet, dass** das Polyvinylacetat eine Molmasse M_{w} von 10.000 bis 90.000 g/mol, besonders bevorzugt von 10.000 bis 75.000 g/mol und ganz besonders bevorzugt von 15.000 bis 25.000 g/mol aufweist.

3. Verwendung nach zumindest einem der Ansprüche 1 bis 2, **dadurch gekennzeichnet, dass** die Monomermischung mindestens folgende Monomere enthält:
a) 20 bis 99,5 Gew.-% zumindest eines Acrylsäureesters und/oder Methacrylsäureesters, dessen Homopolymer eine statische Glasübergangstemperatur von < 0°C, vorzugsweise < -10°C, insbesondere < -20°C, aufweist;
b) 0 bis 40 Gew.-% zumindest eines Acrylsäureesters und/oder Methacrylsäureesters, dessen Homopolymer eine statische Glasübergangstemperatur von > 0°C, vorzugsweise > 10°C, insbesondere > 20°C, aufweist;
c) 0,5 bis 20 Gew.-% Acrylsäure und/oder Methacrylsäure,
d) 0 bis 25 Gew-% weiterer copolymerisierbarer Monomere, wobei die Mengenangaben jeweils auf die Monomermischung bezogen sind, wobei die Glasübergangstemperatur mittels dynamischer Differenzkalorimetrie DDK gemäß der DIN 53 765 gemessen wird, wobei einheitliche Heiz- und Kühlraten von 10 K/min in allen Heiz- und Kühlschritten vorliegen, die Probeneinwaage 20 mg beträgt, eine Vorbehandlung der Haftklebemasse durchgeführt wird, die Temperaturgrenzen -140 °C (statt T_{G} - 50 °C) / + 200 °C (statt T_{G} + 50 °C) betragen und die angegebene Glasübergangstemperatur T_{G} die Probentemperatur im Heizvorgang des zweiten Laufs, bei der die Hälfte der Änderung der spezifischen Wärmekapazität erreicht ist, ist.

4. Verwendung nach zumindest einem der Ansprüche 1 bis 3, **dadurch gekennzeichnet, dass** die Monomermischung mindestens folgende Monomere enthält:
i.a) 50 - 99,5 Gew.-% zumindest eines Acrylsäureesters und/oder Methacrylsäureesters mit der folgenden Formel
CH₂=C(R₁)(COOR₂),
wobei
R₁ = H und R₂ ein linearer Alkylrest mit 2 bis 10 C-Atomen oder ein verzweigter, nichtcyclischer Alkylrest mit mindestens 4 C-Atomen ist und/oder
R₁ = CH₃ und R₂ ein linearer Alkylrest mit 8 bis 10 C-Atomen oder ein verzweigter, nichtcyclischer Alkylrest mit mindestens 10 C-Atomen ist
i.b) 0 bis 40 Gew.-% zumindest eines Acrylsäureesters und/oder Methacrylsäureesters mit der folgenden Formel:
CH₂=C(R₃)(COOR₄),
wobei
R₃ = H oder CH₃ und R₄ ein linearer Alkylrest mit mindestens 12 C-Atomen, vorzugsweise ein Stearylrest, ist
i.c) 0,5 - 20 Gew.-% Acrylsäure und/oder Methacrylsäure
i.d) 0 - 25 Gew.-% zumindest ein N-Alkyl-substituiertes Acrylamid, wobei
die Mengenangaben jeweils auf die Monomermischung bezogen sind.

5. Verwendung nach zumindest einem der Ansprüche 1 bis 3, **dadurch gekennzeichnet, dass** die Monomermischung mindestens folgende Monomere enthält:
ii.a) 49,5 - 89,5 Gew.-% zumindest eines Acrylsäureesters und/oder Methacrylsäureesters bzw. deren freien Säuren mit der folgenden Formel
CH₂=C(R₅)(COOR₆),
wobei
R5 = H oder CH₃ und R₆ ein Alkylrest mit 1 bis 10 C-Atomen oder H ist und das Homopolymer eine statische Glasübergangstemperatur von < -30°C aufweist;
ii.b) 10 bis 40 Gew.-% zumindest eines Acrylsäureesters und/oder Methacrylsäureesters mit der folgenden Formel
CH₂=C(R₇)(COOR₈),
wobei
R₇ = H oder CH₃ und R₈ ein zyklischer Alkylrest mit mindestens 8 C-Atomen oder ein linearer Alkylrest mit mindestens 12 C-Atomen ist und das Homopolymer eine statische Glasübergangstemperatur T_{G} von mindestens 30°C aufweist;
ii.c) 0,5 bis 10 Gew.-% zumindest eines Acrylsäureester und/oder Methacrylsäureesters bzw. deren freien Säuren mit der folgenden Formel:
CH₂=C(R₉)(COOR₁₀),
wobei
Rg = H oder CH₃ und R₁₀ = H oder ein aliphatischer Rest mit einer funktionellen Gruppe X, wobei X = COOH, OH, -NH(R₁₁), SH, SO₃H umfasst und das Homopolymer eine statische Glasübergangstemperatur T_{G} von mindestens 30°C aufweist, wobei R₁₁ = H oder ein linearer oder verzweigter Alkylrest mit bis zu 10 C-Atomen ist,
wobei die Mengenangaben jeweils auf die Monomermischung bezogen sind.

6. Verwendung nach zumindest einem der Ansprüche 1 bis 3, **dadurch gekennzeichnet, dass** die Monomermischung mindestens folgende Monomere enthält:
iii.a) 25 bis 82 Gew.-% lineare Acrylsäureester mit 2 bis 10 C-Atomen im Alkylrest,
iii.b) 10 bis 40 Gew.-% verzweigte nichtzyklische Acrylsäureester mit einer statischen Glasübergangstemperatur T_{G} von nicht mehr als 0°C, vorzugsweise nicht mehr als -10°C, insbesondere nicht mehr als -20°C,
iii.c) 8 bis 15 Gew.-% Acrylsäure, bezogen auf die Gesamtmenge zu polymerisierender Monomere,
iii.d) gegebenenfalls bis zum 10 Gew.-% weiterer copolymerisierbarer Monomere, bezogen auf die Gesamtmenge zu polymerisierender Monomere,
wobei das Verhältnis der linearen Acrylsäureester zu den verzweigten Acrylsäureestern im Bereich von 1:6 bis 10:1 Masseanteilen liegt.

7. Verwendung nach zumindest einem der Ansprüche 3 bis 6, **dadurch gekennzeichnet, dass** die Polymerkomponente bzw. die Polymerkomponenten basierend auf Monomermischungen umfassend die Monomere a) bis d) oder i.a) bis i.d) oder ii.a) bis ii.c) oder iii.a) bis iii.d) mindestens 90 Gew.-%, bevorzugt mindestens 95 Gew-%, besonders bevorzugt mindestens 98 Gew.-%, insbesondere mindestens 99,9 Gew.-%, der Haftklebekomponente oder der Haftklebekomponenten ausmacht bzw. ausmachen.

8. Verwendung nach zumindest einem der vorherigen Ansprüche, **dadurch gekennzeichnet, dass** die Haftklebemasse vernetzt vorliegt.

9. Verwendung nach einem der Ansprüche 1 bis 8, **dadurch gekennzeichnet, dass** die Haftklebemasse in Form eines Klebebandes zur Verfügung gestellt ist.

## Claims

1. Use of a pressure-sensitive adhesive comprising at least one adhesive component comprising at least one polymer component based on a monomer mixture comprising at least one of the following monomers:
- at least one acrylic ester
- at least one methacrylic ester
- acrylic acid
- methacrylic acid
for the bonding of printing plates, particularly to printing cylinders and/or printing sleeves, **characterized in that** the pressure-sensitive adhesive further comprises
7 to 30 wt%, preferably 7 to 25 wt%, more preferably 7 to 20 wt% and more particularly 10 to 15 wt%, based in each case on the overall blend of the at least one adhesive component without solvent, of a polyvinyl acetate which has a molar mass M_{w} of 10 000 to 100 000 g/mol, as determined by gel permeation chromatography, using 100 µl of sample having undergone clarifying filtration, at a sample concentration of 4 g/l, tetrahydrofuran with 0.1 vol% of trifluoroacetic acid as eluent at 25° C, the pre-column used being a column of type PSS-SDV, 5 µ, 10³ Å, ID 8.0 mm x 50 mm, and separation taking place using columns of type PSS-SDV, 5 µ, 10³ Å and also 10⁵ Å and 10⁶ Å each of ID 8.0 mm x 300 mm, the flow rate being 1.0 ml per minute, and lcalibration taking place based on polymethyl methacrylate standards.

2. Use according to Claim 1, **characterized in that** the polyvinyl acetate has a molar mass M_{w} of 10 000 to 90 000 g/mol, more preferably of 10 000 to 75 000 g/mol and most preferably of 15 000 to 25 000 g/mol.

3. Use according to at least one of Claims 1 to 2, **characterized in that** the monomer mixture comprises at least the following monomers:
a) 20 to 99.5 wt% of at least one acrylic ester and/or methacrylic ester whose homopolymer has a static glass transition temperature of < 0°C, preferably < -10°C, more particularly < -20°C;
b) 0 to 40 wt% of at least one acrylic ester and/or methacrylic ester whose homopolymer has a static glass transition temperature of > 0°C, preferably > 10°C, more particularly > 20°C;
c) 0.5 to 20 wt% of acrylic acid and/or methacrylic acid;
d) 0 to 25 wt% of further copolymerizable monomers, the quantity figures being based in each case on the monomer mixture, where the glass transition temperature is measured by differential scanning calorimetry DSC according to DIN 53 765, with uniform heating and cooling rates of 10 K/min in all heating and cooling steps; the initial sample mass is 20 mg; the pressure-sensitive adhesive is pretreated; the temperature limits are -140°C (instead of T_{g} - 50°C) /+200°C (instead of T_{g} + 50°C) ; and the reported glass transition temperature T_{g} is the sample temperature in the heating operation of the second run at which half of the change in specific heat capacity has been reached.

4. Use according to at least one of Claims 1 to 3, **characterized in that** the monomer mixture comprises at least the following monomers:
i.a) 50 - 99.5 wt% of at least one acrylic ester and/or methacrylic ester having the following formula:
CH₂=C(R₁)(COOR₂),
where
R₁ = H and R₂ is a linear alkyl radical having 2 to 10 carbon atoms or is a branched, non-cyclic alkyl radical having at least 4 carbon atoms, and/or
R₁ = CH₃ and R₂ is a linear alkyl radical having 8 to 10 carbon atoms or is a branched, non-cyclic alkyl radical having at least 10 carbon atoms;
i.b) 0 to 40 wt% of at least one acrylic ester and/or methacrylic ester having the following formula:
CH₂=C(R₃)(COOR₄),
where
R₃ = H or CH₃ and R₄ is a linear alkyl radical having at least 12 carbon atoms, preferably a stearyl radical;
i.c) 0.5 - 20 wt% of acrylic acid and/or methacrylic acid;
i.d) 0 - 25 wt% of at least one N-alkyl-substituted acrylamide, where the quantity figures are based in each case on the monomer mixture.

5. Use according to at least one of Claims 1 to 3, **characterized in that** the monomer mixture comprises at least the following monomers:
ii.a) 49.5 - 89.5 wt% of at least one acrylic ester and/or methacrylic ester and/or their free acids, having the following formula:
CH₂=C(R₅)(COOR₆),
where
R₅ = H or CH₃ and R₆ is an alkyl radical having 1 to 10 carbon atoms or H and the homopolymer has a static glass transition temperature of < -30°C;
ii.b) 10 to 40 wt% of at least one acrylic ester and/or methacrylic ester having the following formula:
CH₂=C(R₇)(COOR₈),
where
R₇ = H or CH₃ and R₈ is a cyclic alkyl radical having at least 8 carbon atoms or is a linear alkyl radical having at least 12 carbon atoms and the homopolymer has a static glass transition temperature T_{g} of at least 30°C;
ii.c) 0.5 to 10 wt% of at least one acrylic ester and/or methacrylic ester and/or their free acids, having the following formula:
CH₂=C(R₉)(COOR₁₀),
where
R₉ = H or CH₃ and R₁₀ = H or an aliphatic radical having a functional group X, where X comprises COOH, OH,-NH(R₁₁), SH, SO₃H, and the homopolymer has a static glass transition temperature T_{g} of at least 30°C, where R₁₁ = H or a linear or branched alkyl radical having up to 10 carbon atoms,
where the quantity figures are based in each case on the monomer mixture.

6. Use according to at least one of Claims 1 to 3, **characterized in that** the monomer mixture comprises at least the following monomers:
iii.a) 25 to 82 wt% of linear acrylic esters having 2 to 10 carbon atoms in the alkyl radical;
iii.b) 10 to 40 wt% of branched, non-cyclic acrylic esters having a static glass transition temperature T_{g} of not more than 0°C, preferably not more than -10°C, more particularly not more than -20°C;
iii.c) 8 to 15 wt% of acrylic acid, based on the total amount of monomers to be polymerized;
iii.d) optionally up to 10 wt% of further copolymerizable monomers, based on the total amount of monomers to be polymerized,
where the ratio of the linear acrylic esters to the branched acrylic esters is in the range from 1:6 to 10:1 mass fractions.

7. Use according to at least one of Claims 3 to 6, **characterized in that** the polymer component or polymer components based on monomer mixtures comprising the monomers a) to d) or i.a) to i.d) or ii.a) to ii.c) or iii.a) to iii.d) make(s) up at least 90 wt%, preferably at least 95 wt%, more preferably at least 98 wt%, more particularly at least 99.9 wt% of the adhesive component or components.

8. Use according to at least one of the preceding claims, **characterized in that** the pressure-sensitive adhesive is in crosslinked form.

9. Use according to any of Claims 1 to 8, **characterized in that** the pressure-sensitive adhesive is provided in the form of an adhesive tape.

## Revendications

1. Utilisation d'un matériau adhésif de contact, comprenant au moins un composant adhésif de contact, comprenant au moins un composant polymère à base d'un mélange de monomères contenant au moins un des monomères suivants :
- au moins un ester de l'acide acrylique,
- au moins un ester de l'acide méthacrylique,
- de l'acide acrylique,
- de l'acide méthacrylique,
pour le collage de plaques d'impression, notamment sur des cylindres d'impression et/ou des gaines d'impression, **caractérisée en ce que** le matériau adhésif de contact contient en outre 7 à 30 % en poids, de préférence 7 à 25 % en poids, de manière particulièrement préférée 7 à 20 % en poids et notamment 10 à 15 % en poids, à chaque fois par rapport au mélange total dudit au moins un composant adhésif de contact sans solvant, d'un polyacétate de vinyle, qui présente une masse molaire M_{w} de 10 000 à 100 000 g/mol, déterminée par chromatographie par perméation de gel, en utilisant un échantillon filtré transparent de 100 µl à une concentration d'échantillon de 4 g/l, du tétrahydrofurane contenant 0,1 % en volume d'acide trifluoroacétique en tant qu'éluant à 25 °C, une colonne de type PSS-SDV, 5 µ, 10³ Å, DI 8,0 mm x 50 mm étant utilisée en tant que colonne préliminaire, et les colonnes de type PSS-SDV, 5 µ, 10³ Å, ainsi que 10⁵ Â et 10⁶ Â avec chacune un DI de 8,0 mm x 300 mm étant utilisées pour la séparation, le débit étant de 1,0 ml par minute et l'étalonnage ayant lieu par rapport à un étalon polyméthacrylate de méthyle.

2. Utilisation selon la revendication 1, **caractérisée en ce que** le polyacétate de vinyle présente une masse molaire M_{w} de 10 000 à 90 000 g/mol, de manière particulièrement préférée de 10 000 à 75 000 g/mol et de manière tout particulièrement préférée de 15 000 à 25 000 g/mol.

3. Utilisation selon au moins l'une quelconque des revendications 1 à 2, **caractérisée en ce que** le mélange de monomères contient au moins les monomères suivants :
a) 20 à 99,5 % en poids d'au moins un ester de l'acide acrylique et/ou ester de l'acide méthacrylique, dont l'homopolymère présente une température de transition vitreuse statique < 0 °C, de préférence < -10 °C, notamment < -20 °C ;
b) 0 à 40 % en poids d'au moins un ester de l'acide acrylique et/ou ester de l'acide méthacrylique, dont l'homopolymère présente une température de transition vitreuse statique > 0 °C, de préférence > 10 °C, notamment > 20 °C ;
c) 0,5 à 20 % en poids d'acide acrylique et/ou d'acide méthacrylique,
d) 0 à 25 % en poids d'autres monomères copolymérisables,
les indications de quantité se rapportant à chaque fois au mélange de monomères, la température de transition vitreuse étant mesurée par calorimétrie différentielle dynamique DDK selon DIN 53 765, des taux de chauffage et de refroidissement uniformes de 10 K/min étant présents dans toutes les étapes de chauffage et de refroidissement, le poids de l'échantillon étant de 20 mg, un prétraitement du matériau adhésif de contact étant réalisé, les limites de température étant de-140 °C (au lieu de T_{G} - 50 °C) /+200 °C (au lieu de T_{G} + 50 °C), et la température de transition vitreuse T_{G} indiquée étant la température de l'échantillon lors du processus de chauffage du deuxième passage lors duquel la moitié de la modification de la capacité thermique spécifique est atteinte.

4. Utilisation selon au moins l'une quelconque des revendications 1 à 3, **caractérisée en ce que** le mélange de monomères contient au moins les monomères suivants :
i.a) 50 à 99,5 % en poids d'au moins un ester de l'acide acrylique et/ou ester de l'acide méthacrylique ayant la formule suivante :
OH₂=O(R₁)(COOR₂),
dans laquelle
R₁ = H et R₂ est un radical alkyle linéaire de 2 à 10 atomes C ou un radical alkyle ramifié non cyclique contenant au moins 4 atomes C et/ou R₁ = CH₃ et R₂ est un radical alkyle linéaire de 8 à 10 atomes C ou un radical alkyle ramifié non cyclique contenant au moins 10 atomes C,
i.b) 0 à 40 % en poids d'au moins un ester de l'acide acrylique et/ou ester de l'acide méthacrylique ayant la formule suivante :
CH₂=C(R₃)(COOR₄),
dans laquelle
R₃ = H ou CH₃ et R₄ est un radical alkyle linéaire contenant au moins 12 atomes C, de préférence un radical stéaryle,
i.c) 0,5 à 20 % en poids d'acide acrylique et/ou d'acide méthacrylique,
i.d) 0 à 25 % en poids d'au moins un acrylamide à substitution N-alkyle,
les données de quantité se rapportant à chaque fois au mélange de monomères.

5. Utilisation selon au moins l'une quelconque des revendications 1 à 3, **caractérisée en ce que** le mélange de monomères contient au moins les monomères suivants :
ii.a) 49,5 à 89,5 % en poids d'au moins un ester de l'acide acrylique et/ou ester de l'acide méthacrylique ou leurs acides libres ayant la formule suivante :
CH₂=C(R₅)(COOR₆),
dans laquelle
R₅ = H ou CH₃ et R₆ est un radical alkyle de 1 à 10 atomes C ou H, et l'homopolymère présente une température de transition vitreuse statique < -30 °C ;
ii.b) 10 à 40 % en poids d'au moins un ester de l'acide acrylique et/ou ester de l'acide méthacrylique ayant la formule suivante :
CH₂=C(R₇)(COOR₈),
dans laquelle
R₇ = H ou CH₃ et R₈ est un radical alkyle cyclique contenant au moins 8 atomes C ou un radical alkyle linéaire contenant au moins 12 atomes C, et l'homopolymère présente une température de transition vitreuse statique T_{G} d'au moins 30 °C ;
ii.c) 0,5 à 10 % en poids d'au moins un ester de l'acide acrylique et/ou ester de l'acide méthacrylique ou leurs acides libres ayant la formule suivante :
CH₂=C(R₉)(COOR₁₀),
dans laquelle
R₉ = H ou CH₃ et R₁₀ = H ou un radical aliphatique contenant un groupe fonctionnel X, avec X = COOH, OH, -NH(R₁₁), SH, SO₃H, et l'homopolymère présente une température de transition vitreuse statique T_{G} d'au moins 30 °C, avec R₁₁ = H ou un radical alkyle linéaire ou ramifié contenant jusqu'à 10 atomes C,
les données de quantité se rapportant à chaque fois au mélange de monomères.

6. Utilisation selon au moins l'une quelconque des revendications 1 à 3, **caractérisée en ce que** le mélange de monomères contient au moins les monomères suivants :
iii.a) 25 à 82 % en poids d'esters de l'acide acrylique linéaires contenant 2 à 10 atomes C dans le radical alkyle,
iii.b) 10 à 40 % en poids d'esters de l'acide acrylique non cycliques ramifiés ayant une température de transition vitreuse statique T_{G} inférieure ou égale à 0 °C, de préférence inférieure ou égale à -10 °C, notamment inférieure ou égale à -20 °C,
iii.c) 8 à 15 % en poids d'acide acrylique, par rapport à la quantité totale de monomères à polymériser,
iii.d) éventuellement jusqu'à 10 % en poids d'autres monomères copolymérisables, par rapport à la quantité totale de monomères à polymériser,
le rapport entre les esters de l'acide acrylique linéaires et les esters de l'acide acrylique ramifiés se situant dans la plage allant de 1:6 à 10:1 parties en masse.

7. Utilisation selon au moins l'une quelconque des revendications 3 à 6, **caractérisée en ce que** le composant polymère ou les composants polymères à base de mélanges de monomères comprenant les monomères a) à d) ou i.a) à i.d) ou ii.a) à ii.c) ou iii.a) à iii.d) représentent au moins 90 % en poids, de préférence au moins 95 % en poids, de manière particulièrement préférée au moins 98 % en poids, notamment au moins 99,9 % en poids, du composant adhésif de contact ou des composants adhésifs de contact.

8. Utilisation selon au moins l'une quelconque des revendications précédentes, **caractérisée en ce que** le matériau adhésif de contact se présente sous forme réticulée.

9. Utilisation selon l'une quelconque des revendications 1 à 8, **caractérisée en ce que** le matériau adhésif de contact est mis à disposition sous la forme d'une bande adhésive.
